# NEUE EUROPÄISCHE PATENTSCHRIFT

(11) **EP 1 654 047 B2**
(45) Veröffentlichungstag und Bekanntmachung des Hinweises auf die Entscheidung über den Einspruch: **05.12.2012**
(45) Hinweis auf die Patenterteilung: 09.09.2009
(21) Anmeldenummer: 04741048.5
(22) Anmeldetag: 15.07.2004
(51) Int. Cl.: B01D 3/14, B01D 3/34

(54) **RECYCLING VON IONISCHEN FLÜSSIGKEITEN BEI DER EXTRAKTIV-DESTILLATION**
RECYCLING OF IONIC LIQUIDS PRODUCED IN EXTRACTIVE DISTILLATION
RECYCLAGE DE LIQUIDES IONIQUES LORS D'UNE DISTILLATION EXTRACTIVE

(30) Priorität: 05.08.2003 DE 10336555
(43) Veröffentlichungstag der Anmeldung: 10.05.2006
(73) Patentinhaber: BASF SE, 67056 Ludwigshafen (DE)
(72) Erfinder: BESTE, York, Alexander, 67346 Speyer (DE); SCHOENMAKERS, Hartmut, 69221 Dossenheim (DE); ARLT, Wolfgang, 16540 Hohen Neuendorf (DE); SEILER, Matthias, 64347 Griesheim (DE); JORK, Carsten, 10559 Berlin (DE)
(74) Vertreter: Reitstötter - Kinzebach
(86) Internationale Anmeldenummer: PCT/EP2004/007868
(87) Internationale Veröffentlichungsnummer: WO 2005/016484

(56) Entgegenhaltungen:
- WO-A-02/074718
- WO-A-03/040264
- WO-A2-00/64853
- WO-A2-02/094883
- DE-A1- 3 903 661
- DE-A1- 10 160 518
- US-A1- 2002 063 240
- US-A1- 2003 125 599
- KLAUS SATTLER THERMISCHE TRENNVERFAHREN Bd. 3, 2001, WILEY-VCH,

## Beschreibung

Die vorliegende Erfindung betrifft ein verbessertes Verfahren zur Aufarbeitung eines Sumpfstromes enthaltend Schwersieder und ionische Flüssigkeiten (IF) aus einer Extraktiv-Rektifikation.

In der Industrie treten eine Vielzahl von Flüssigmischungen auf, die sich nicht durch konventionelle Rektifikation, sondern vorzugsweise durch Extraktiv-Rektifikation [Stichlmair, S. und Fair, J., Distillation, ISBN 0-471-25241-7, Seite 241 ff] trennen lassen. Dieser Sachverhalt ist in dem ähnlichen Siedeverhalten der Gemischkomponenten begründet, das heißt in ihrer Eigenschaft, sich bei einem definiertem Druck und einer definierten Temperatur im nahezu gleichen oder gleichen molaren Konzentrationsverhältnis auf die Dampf- und Flüssigphase zu verteilen.

Der Trennaufwand für eine binäre - aus den Komponenten i und j bestehende - Flüssigmischung bei der Rektifikation spiegelt sich im sogenannten Trennfaktor αᵢⱼ, dem Verhältnis der Verteilungskoeffizienten der Komponenten i und j, wider. Je näher der Trennfaktor dem Wert eins kommt, desto aufwendiger wird die Trennung der Gemischkomponenten mittels konventioneller Rektifikation, da entweder die Trennstufenanzahl der Rektifikationskolonne und/oder das Rücklaufverhältnis im Kolonnenkopf vergrößert werden muss. Nimmt der Trennfaktor den Wert eins an, so liegt ein azeotroper Punkt vor, und die weitere Aufkonzentrierung der Gemischkomponenten ist auch durch eine Erhöhung der Trennstufenzahl oder des Rücklaufverhältnisses nicht mehr möglich. Generell ist bei der Verwendung des Trennfaktors zu beachten, dass er größer oder kleiner 1 sein kann, je nachdem ob der Verteilungskoeffizient des Leichtsieders im Zähler oder im Nenner steht. Normalerweise wird der Leichtsieder im Zähler aufgetragen, so dass der Trennfaktor größer 1 ist.

Ein in der Industrie häufig praktiziertes Vorgehen zur Trennung engsiedender -hierbei wird ein Trennfaktor etwa kleiner 1,2 verstanden - oder azeotroper Systeme stellt die Zugabe eines selektiven Zusatzstoffes, des sogenannten Entrainers, in einer Extraktiv-Rektifikation dar. Ein geeigneter Zusatzstoff beeinflusst durch selektive Wechselwirkungen mit einer oder mehreren der Gemischkomponenten den Trennfaktor, so dass die Auftrennung der engsiedenden oder azeotrop-siedenden Gemischkomponenten ermöglicht wird. Die Kopfkomponente ist die in Anwesenheit des Entrainers leichter siedende Komponente und im Sumpf befindet sich die in Anwesenheit des Entrainers schwerer siedenden Komponenten.

Ein Gütemaß für die Intensität der Wechselwirkungen des Entrainers mit einer oder mehreren der Gemischkomponenten stellt die sogenannte Selektivität dar. Die Selektivität ist definiert als das Verhältnis aus Grenzaktivitätskoeffzient der Komponente i zu Grenzaktivitätskoeffizient der Komponente j, wobei die Komponenten i und j im Entrainer unendlich verdünnt vorliegen [Schult, C. J. et. al.; Infinite-dilution activity coefficients for several solutes in hexadecane and in n-methyl-2-pyrrolidone (NMP): experimental measurements and UNIFAC predictions; Fluid Phase Equilibria 179 (2001) S.117-129]. Wie von Schult et al. dargelegt, führt eine höhere Entrainer-Selektivität zu einer höheren relativen Flüchtigkeit, einem kleineren Rücklaufverhältnis und somit zu niedrigeren Trennkosten. Wie weiter hinten offenbart ist eine möglichst hohe Selektivität z. B. größer 1,3, bevorzugt größer 2,0. angestrebt.

Im der Patentschrift WO 02/074718 wurde offenbart, dass Ionische Flüssigkeiten (IF) besonders gute Entrainer zur Trennung engsiedender oder azeotroper Flüssigmischungen sind und herkömmlichen Entrainer überlegen sind. Die überlegenheit kann direkt an Selektivität und Trennfaktor abgelesen werden. Bei Verwendung einer geeigneten ionischen Flüssigkeit ist der Trennfaktor am azeotropen Punkt stärker verschieden von eins als bei Verwendung eines konventionellen Zusatzstoffes in gleichen Mengen.

Ein erster Gegenstand der Erfindung ist ein Verfahren zur Aufarbeitung eines Sumpfstromes enthaltend ein oder mehrere Schwersieder und ionische Flüssigkeit aus einer Extraktiv-Rektifikation, bei welcher die ionische Flüssigkeit als Entrainer eingesetzt wird, dadurch gekennzeichnet, dass man den Sumpfstrom einer Verdampferstufe zuführt, welche bei einem Druck kleiner als 500 mbar betrieben wird, wobei man den enthaltenen Schwersieder größtenteils dampfförmig von der ionischen Flüssigkeit abtrennt, so dass der Schwersiedergehalt in der Ionischen Flüssigkeit auf Konzentrationen kleiner 5 Gew.-% absinkt, wobei man die aufbereitete ionische Flüssigkeit im Anschluss einem mit Inertgas oder überhitztem Dampf beaufschlagten Stripper zuführt, weicher bei Umgebungsdruck betrieben wird.

Ein zweiter Gegenstand der Erfindung ist ein Verfahren zur Aufarbeitung eines Sumpfstromes enthaltend ein oder mehrere Schwersieder und ionische Flüssigkeit aus einer Extraktiv-Rektifikation, bei welcher die ionische Flüssigkeit als Entrainer eingesetzt wird, dadurch gekennzeichnet, dass man den Sumpfstrom einer Verdampferstufe zuführt, welche bei einem Druck kleiner als 500 mbar betrieben wird, wobei man den enthaltenen Schwersieder größtenteils dampfförmig von der ionischen Flüssigkeit abtrennt, so dass der Schwersiedergehalt in der Ionischen Flüssigkeit auf Konzentrationen kleiner 5 Gew.-% absinkt, wobei man die aufbereitete ionische Flüssigkeit im Anschluss einem mit Inertgas oder überhitztem Dampf beaufschlagten Stripper zuführt, welcher bei einem Druck kleiner als 900mbar, besonders bevorzugt kleiner 500mbar betrieben wird.

Ein dritter Gegenstand der Erfindung ist ein Verfahren zur Aufarbeitung eines Sumpfstromes enthaltend ein oder mehrere Schwersieder und ionische Flüssigkeit aus einer Extraktiv-Rektifikation, bei welcher die ionische Flüssigkeit als Entrainer eingesetzt wird, dadurch gekennzeichnet, dass man den Sumpfstrom einem mit überhitztem Dampf, welcher den Leichtsieder enthält, beaufschlagten Stripper zuführt, welcher bei Umgebungsdruck oder bei einem Druck kleiner 900 mbar betrieben wird.

Unter ionischen Flüssigkeiten werden solche verstanden, wie sie von Wasserscheid und Keim in der Angewandten Chemie 2000, 112, 3926-3945 definiert sind. Die Stoffgruppe der ionischen Flüssigkeiten stellt ein neuartiges Lösungsmittel dar. Wie in der genannten Druckschrift aufgeführt handelt es sich bei ionischen Flüssigkeiten um bei relativ niedrigen Temperaturen schmelzende Salze mit nichtmolekularem, ionischen Charakter. Sie sind bereits bei relativ niedrigen Temperaturen flüssig und dabei relativ niedrigviskos. Sie besitzen sehr gute Löslichkeiten für eine große Anzahl organischer, anorganischer und polymerer Substanzen.

Ionische Flüssigkeiten sind im Vergleich zu ionischen Salzen bei wesentlich geringeren Temperaturen (in der Regel unterhalb von 200°C,) flüssig und besitzen häufig einen Schmelzpunkt unterhalb von 0°C, im Einzelfall bis -96°C, was wichtig für die industrielle Umsetzung der Extraktiv-Rektifikation ist.

Darüber hinaus sind ionische Flüssigkeiten in der Regel nicht brennbar, nicht korrosiv und wenig viskos und zeichnen sich durch einen nicht messbaren Dampfdruck aus. Als ionische Flüssigkeiten werden erfindungsgemäß solche Verbindungen bezeichnet, die mindestens eine positive und mindestens eine negative Ladung aufweisen, insgesamt jedoch ladungsneutral sind, und einen Schmelzpunkt unter 200°C aufweisen, bevorzugt unter 100, besonders bevorzugt unter Umgebungstemperatur.

Die Ionischen Flüssigkeiten können auch mehrere positive oder negative Ladungen aufweisen, beispielsweise 1 bis 5, bevorzugt 1 bis 4, besonders bevorzugt 1 bis 3, ganz besonders bevorzugt 1 bis 2, insbesondere jedoch je eine positive und negative Ladung.

Die Ladungen können sich an verschiedenen lokalisierten oder delokalisierten Bereichen innerhalb eines Moleküls befinden, also betainartig, oder auf je ein getrenntes Anion und Kation verteilt sein. Bevorzugt sind solche Ionischen Flüssigkeiten, die aus mindestens einem Kation und mindestens einem Anion aufgebaut sind. Kation und Anion können, wie oben ausgeführt, ein oder mehrfach, bevorzugt einfach geladen sein.

Selbstverständlich sind auch Gemische verschiedener ionischer Flüssigkeiten oder Mischungen aus herkömmlichen Entrainern, wie n-Methylpyrrolidon, Dimethylformamid, Ethandiol, Benzol, Cyclohexan, Wasser usw., mit Ionischen Flüssigkeiten denkbar.

Bevorzugt als Kation sind Ammonium- oder Phosphoniumionen, oder solche Kationen, die mindestens einen fünf- bis sechsgliedrigen Heterocyclus enthalten, der mindestens ein Phosphor- oder Stickstoffatom sowie gegebenenfalls ein Sauerstoff- oder Schwefelatom aufweist, besonders bevorzugt solche Verbindungen, die mindestens einen fünf- bis sechsgliedrigen Heterocyclus enthalten, der ein, zwei oder drei Stickstoffatome und ein Schwefel- oder ein Sauerstoffatom aufweist, ganz besonders bevorzugt solche mit ein oder zwei Stickstoffatomen.

Besonders bevorzugte Ionische Flüssigkeiten sind solche, die ein Molgewicht unter 1000 g/mol aufweisen, ganz besonders bevorzugt unter 350 g/mol.

Weiterhin sind solche Kationen bevorzugt, die ausgewählt sind aus den Verbindungen der Formeln (Ia) bis (Iw), 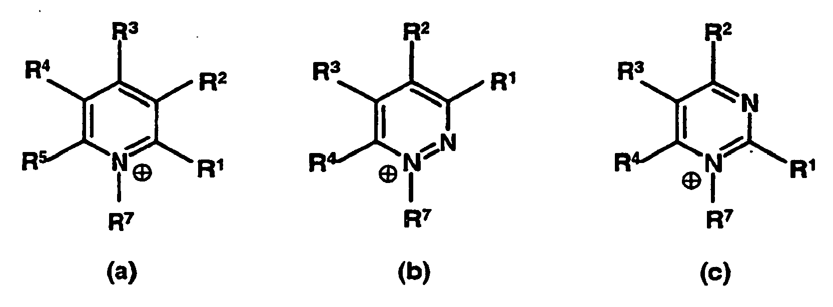 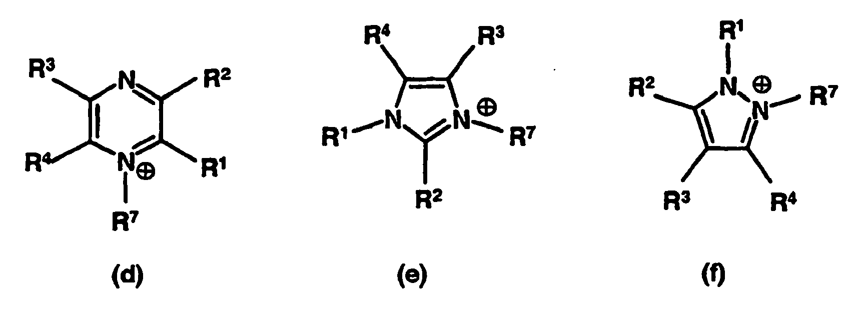 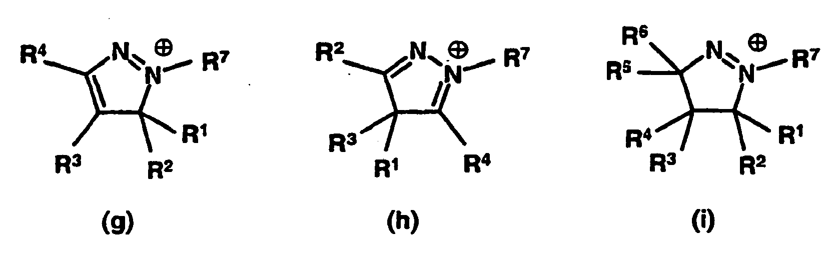 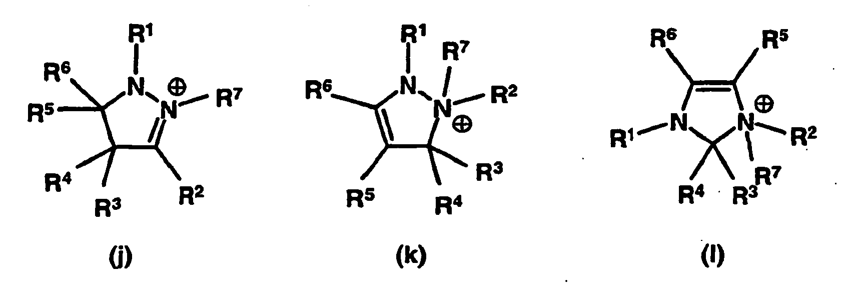 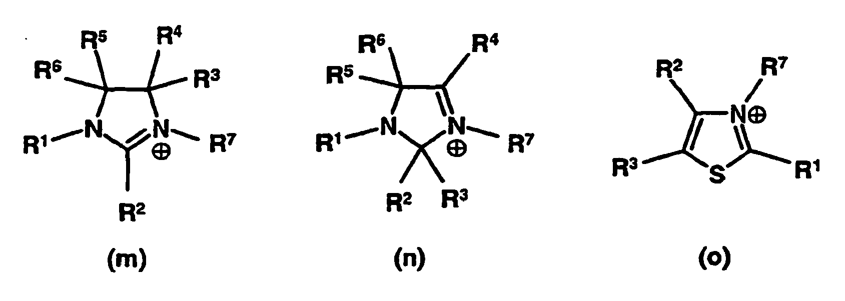 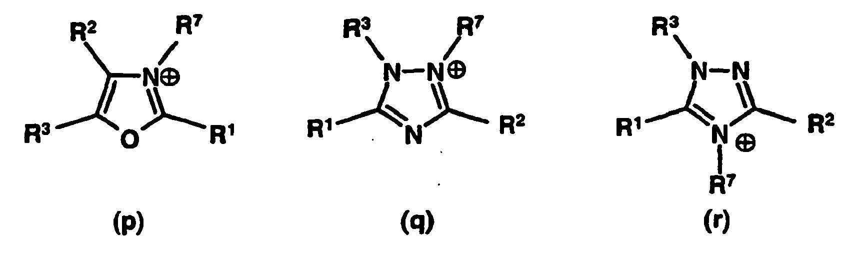 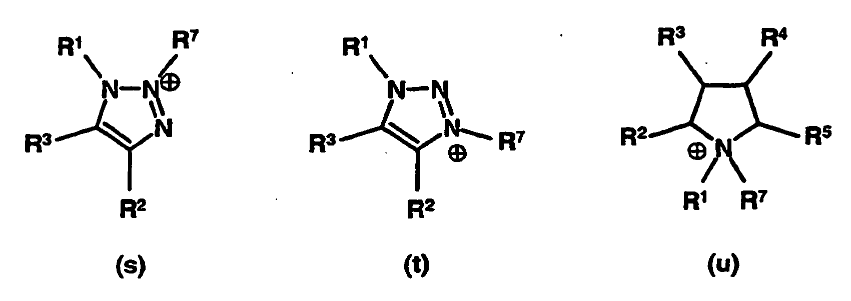 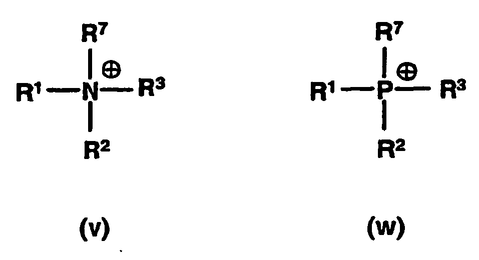 sowie Oligo- bzw. Polymere, die diese Strukturen enthalten,
worin
R¹, R², R³, R⁴, R⁵, R⁶ und R⁷ unabhängig voneinander jeweils C₁ - C₁₈-Alkyl, gegebenenfalls durch ein oder mehrere Sauerstoff- und/oder Schwefelatome und/oder ein oder mehrere substituierte oder unsubstituierte Iminogruppen unterbrochenes C₂ - C₁₈-Alkyl, C₆ - C₁₂-Aryl, C₅ - C₁₂-Cycloalkyl oder einen fünf- bis sechsgliedrigen, Sauerstoff-, Stickstoff- und/oder Schwefelatome aufweisenden Heterocyclus bedeuten oder zwei von ihnen gemeinsam einen ungesättigten, gesättigten oder aromatischen und gegebenenfalls durch ein oder mehrere Sauerstoff- und/oder Schwefelatome und/oder ein oder mehrere substituierte oder unsubstituierte Iminogruppen unterbrochenen Ring bilden, wobei die genannten Reste jeweils durch funktionelle Gruppen, Aryl, Alkyl, Aryloxy, Alkyloxy, Halogen, Heteroatome und/oder Heterocyclen substituiert sein können.
R¹, R², R³, R⁴, R⁵ und R⁶ können zusätzlich dazu Wasserstoff bedeuten.
R⁷ kann darüberhinaus C₁ - C₁₈-Alkyloyl (Alkylcarbonyl), C₁ - C₁₈- Alkyloxycarbonyl, C₅ - C₁₂-Cycloalkylcarbonyl oder C₆ - C₁₂-Aryloyl (Arylcarbonyl) bedeuten, wobei die genannten Reste jeweils durch funktionelle Gruppen, Aryl, Alkyl, Aryloxy, Alkyloxy, Halogen, Heteroatome und/oder Heterocyclen substituiert sein können.

Darin bedeuten
gegebenenfalls durch funktionelle Gruppen, Aryl, Alkyl, Aryloxy, Alkyloxy, Halogen, Heteroatome und/oder Heterocyclen substituiertes C₁ - C₁₈-Alkyl beispielsweise Methyl, Ethyl, Propyl, Isopropyl, n-Butyl, sec-Butyl, tert.-Butyl, Pentyl, Hexyl, Heptyl, Octyl, 2-Etylhexyl, 2,4,4-Trimethylpentyl, Decyl, Dodecyl, Tetradecyl, Hetadecyl, Octadecyl, 1,1-Dimethylpropyl, 1,1-Dimethylbutyl, 1,1,3,3-Tetramethylbutyl, Benzyl, 1-Phenylethyl, 2-Phenylethyl, α,α-Dimethylbenzyl, Benzhydryl, p-Tolylmethyl,1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonethyl, 2-Ethoxycarbonylethyl, 2-Butoxycarbonylpropyl, 1,2-Di-(methoxycarbonyl)-ethyl, 2-Methoxyethyl, 2-Ethoxyethyl, 2-Butoxyethyl, Diethoxymethyl, Diethoxyethyl, 1,3-Dioxolan-2-yl, 1,3-Dioxan-2-yl, 2-Methyl-1,3-dioxolan-2-yl, 4-Methyl-1,3-dioxolan-2-yl, 2-Isopropoxyethyl, 2-Butoxypropyl, 2-Octyloxyethyl, Chlormethyl, 2-Chlorethyl, Trichlormethyl, Trifluormethyl, 1,1-Dimethyl-2-chlorethyl, 2-Methoxyisopropyl, 2-Ethoxyethyl, Butylthiomethyl, 2-Dodecylthioethyl, 2-Phenylthioethyl, 2,2,2-Trifluorethyl, 2-Hydroxyethyl, 2-Hydroxypropyl, 3-Hydroxypropyl, 4-Hydroxybutyl, 6-Hydroxyhexyl, 2-Aminoethyl, 2-Aminopropyl, 3-Aminopropyl, 4-Aminobutyl, 6-Aminohexyl, 2-Methylaminoethyl, 2-Methylaminopropyl, 3-Methylaminopropyl, 4-Methylaminobutyl, 6-Methylaminohexyl, 2-Dimethylaminoethyl, 2-Dimethylaminopropyl, 3-Dimethylaminopropyl, 4-Dimethylaminobutyl, 6-Dimethylaminohexyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl oder 6-Ethoxyhexyl und,
gegebenenfalls durch ein oder mehrere Sauerstoff- und/oder Schwefelatome und/oder ein oder mehrere substituierte oder unsubstituierte Iminogruppen unterbrochenes C₂ - C₁₈-Alkyl beispielsweise 5-Hydroxy-3-oxa-pentyl, 8-Hydroxy-3,6-dioxa-octyl, 11-Hydroxy-3,6,9-trioxa-undecyl, 7-Hydroxy-4-oxa-heptyl, 11-Hydroxy-4,8-dioxa-undecyl, 15-Hydroxy-4,8,12-trioxa-pentadecyl, 9-Hydroxy-5-oxa-nonyl, 14-Hydroxy-5,10-oxa-tetradecyl, 5-Methoxy-3-oxa-pentyl, 8-Methoxy-3,6-dioxa-octyl, 11-Methoxy-3,6,9-trioxa-undecyl, 7-Methoxy-4-oxa-heptyl, 11-Methoxy-4,8-dioxa-undecyl, 15-Methoxy-4,8,12-trioxa-pentadecyl, 9-Methoxy-5-oxa-nonyl, 14-Methoxy-5,10-oxa-tetradecyl, 5-Ethoxy-3-oxa-pentyl, 8-Ethoxy-3,6-dioxa-octyl, 11-Ethoxy-3,6,9-trioxa-undecyl, 7-Ethoxy-4-oxa-heptyl, 11-Ethoxy-4,8-dioxa-undecyl, 15-Ethoxy-4,8,12-trioxa-pentadecyl, 9-Ethoxy-5-oxa-nonyl oder 14-Ethoxy-5,10-oxa-tetradecyl.

Bilden zwei Reste einen Ring, so können diese Reste gemeinsam bedeuten 1,3-Propylen, 1,4-Butylen, 2-Oxa-1,3-propylen, 1-Oxa-1,3-propylen, 2-Oxa-1,3-propylen, 1-Oxa-1,3-propenylen, 1-Aza-1,3-propenylen, 1-C₁-C₄-Alkyl-1-aza-1,3-propenylen, 1,4-Buta-1,3-dienylen, 1-Aza-1,4-buta-1,3-dienylen oder 2-Aza-1,4-buta-1,3-dienylen.

Die Anzahl der Sauerstoff- und/oder Schwefelatome und/oder Iminogruppen ist nicht beschränkt. In der Regel beträgt sie nicht mehr als 5 in dem Rest, bevorzugt nicht mehr als 4 und ganz besonders bevorzugt nicht mehr als 3.

Weiterhin befinden sich zwischen zwei Heteroatomen in der Regel mindestens ein Kohlenstoffatom, bevorzugt mindestens zwei.

Substituierte und unsubstituierte Iminogruppen können beispielsweise Imino-, Methylimino-, iso-Propylimino, n-Butylimino oder tert-Butylimino sein.

Weiterhin bedeuten
funktionelle Gruppen Carboxy, Carboxamid, Hydroxy, Di-(C₁-C₄-Alkyl)-amino, C₁-C₄-Alkyloxycarbonyl, Cyano oder C₁-C₄-Alkyloxy,
gegebenenfalls durch funktionelle Gruppen, Aryl, Alkyl, Aryloxy, Alkyloxy, Halogen, Heteroatome und/oder Heterocyclen substituiertes C₆ - C₁₂-Aryl beispielsweise Phenyl, Tolyl, Xylyl, α-Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, iso-Propylphenyl, tert.-Butylphenyl, Dodecylphenyl, Methoxyphenyl, Dimethoxyphenyl, Ethoxyphenyl, Hexyloxyphenyl, Methylnaphthyl, Isopropylnaphthyl, Chlornaphthyl, Ethoxynaphthyl, 2,6-Dimethylphenyl, 2,4,6-Trimethylphenyl, 2,6-Dimethoxyphenyl, 2,6-Dichlorphenyl, 4-Bromphenyl, 2- oder 4-Nitrophenyl, 2,4- oder 2,6-Dinitrophenyl, 4-Dimethylaminophenyl, 4-Acetylphenyl, Methoxyethylphenyl oder Ethoxymethylphenyl,
gegebenenfalls durch funktionelle Gruppen, Aryl, Alkyl, Aryloxy, Alkyloxy, Halogen, Heteroatome und/oder Heterocyclen substituiertes C₅ - C₁₂-Cycloalkyl beispielsweise Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl sowie ein gesättigtes oder ungesättigtes bicyclisches System wie z.B. Norbornyl oder Norbornenyl,
ein fünf- bis sechsgliedriger, Sauerstoff-, Stickstoff- und/oder Schwefelatome aufweisender Heterocyclus beispielsweise Furyl, Thiophenyl, Pyrryl, Pyridyl, Indolyl, Benzoxazolyl, Dioxolyl, Dioxyl, Benzimidazolyl, Benzthiazolyl, Dimethylpyridyl, Methylchinolyl, Dimethylpyrryl, Methoxyfuryl, Dimethoxypyridyl, Difluorpyridyl, Methylthiophenyl, Isopropylthiophenyl oder tert.-Butylthiophenyl und

C₁ bis C₄-Alkyl beispielsweise Methyl, Ethyl, Propyl, Isopropyl, n-Butyl, sec-Butyl oder tert.-Butyl.

C₁ - C₁₈-Alkyloyl (Alkylcarbonyl) kann beispielsweise sein Acetyl, Propionyl, n-Butyloyl, sec-Butyloyl, tert.-Butyloyl, 2-Etylhexylcarbonyl, Decanoyl, Dodecanoyl, Chloracetyl, Trichloracetyl oder Trifluoracetyl.

C₁ - C₁₈- Alkyloxycarbonyl kann beispielsweise sein Methyloxycarbonyl, Ethyloxycarbonyl, Propyloxycarbonyl, Isopropyloxycarbonyl, n-Butyloxycarbonyl, sec-Butyloxycarbonyl, tert.-Butyloxycarbonyl, Hexyloxycarbonyl, 2-Etylhexyloxycarbonyl oder Benzyloxycarbonyl.

C₅ - C₁₂-Cycloalkylcarbonyl kann beispielsweise sein Cyclopentylcarbonyl, Cyclohexylcarbonyl oder Cyclododecylcarbonyl.

C₆ - C₁₂-Aryloyl (Arylcarbonyl) kann beispielsweise sein Benzoyl, Toluyl, Xyloyl, α-Naphthoyl, β-Naphthoyl, Chlorbenzoyl, Dichlorbenzoyl, Trichlorbenzoyl oder Trimethylbenzoyl.

Bevorzugt sind R¹, R², R³, R⁴, R⁵ und R⁶ unabhängig voneinander Wasserstoff, Methyl, Ethyl, n-Butyl, 2-Hydroxyethyl, 2-Cyanoethyl, 2-(Methoxycarbonyl)-ethyl, 2-(Ethoxycarbonyl)-ethyl, 2-(n-Butoxycarbonyl)-ethyl, Dimethylamino, Diethylamino und Chlor.

Bevorzugt ist R⁷ Methyl, Ethyl, n-Butyl, 2-Hydroxyethyl, 2-Cyanoethyl, 2-(Methoxycarbonyl)-ethyl, 2-(Ethoxycarbonyl)-ethyl, 2-(n-Butoxycarbonyl)-ethyl, Acetyl, Propionyl, t-Butyryl, Methoxycarbonyl, Ethoxycarbonyl oder n-Butoxycarbonyl.

Besonders bevorzugte Pyridiniumionen (la) sind solche, bei denen einer der Reste R¹ bis R⁵ Methyl, Ethyl oder Chlor ist, R⁷ Acetyl, Methyl, Ethyl oder n-Butyl und alle anderen Wasserstoff sind, oder R³ Dimethylamino, R⁷ Acetyl, Methyl, Ethyl oder n-Butyl und alle anderen Wasserstoff sind oder R⁷ Acetyl, Methyl, Ethyl oder n-Butyl und alle anderen Wasserstoff sind oder R² Carboxy oder Carboxamid, R⁷ Acetyl, Methyl, Ethyl oder n-Butyl und alle anderen Wasserstoff oder R¹ und R² oder R² und R³ 1,4-Buta-1,3-dienylen, R⁷ Acetyl, Methyl, Ethyl oder n-Butyl und alle anderen Wasserstoff sind.

Besonders bevorzugte Pyridaziniumionen (Ib) sind solche, bei denen einer der Reste R¹ bis R⁴ Methyl oder Ethyl, R⁷ Acetyl, Methyl, Ethyl oder n-Butyl und alle anderen Wasserstoff oder R⁷ Acetyl, Methyl, Ethyl oder n-Butyl, und alle anderen Wasserstoff sind.

Besonders bevorzugte Pyrimidiniumionen (Ic) sind solche, bei denen R² bis R⁴ Wasserstoff oder Methyl, R⁷ Acetyl, Methyl, Ethyl oder n-Butyl und R¹ Wasserstoff, Methyl oder Ethyl ist, oder R² und R⁴ Methyl, R³ Wasserstoff und R¹ Wasserstoff, Methyl oder Ethyl und R⁷ Acetyl, Methyl, Ethyl oder n-Butyl ist.

Besonders bevorzugte Pyraziniumionen (Id) sind solche, bei denen
R¹ bis R⁴ alle Methyl und
R⁷ Acetyl, Methyl, Ethyl oder n-Butyl oder R⁷ Acetyl, Methyl, Ethyl oder n-Butyl und alle anderen Wasserstoff sind.

Besonders bevorzugte Imidazoliumionen (Ie) sind solche, bei denen unabhängig voneinander
R¹ ausgewählt ist unter Methyl, Ethyl, n-Propyl, n-Butyl, n-Pentyl, n-Octyl, n-Decyl, n-Dodecyl, 2-Hydroxyethyl oder 2-Cyanoethyl,
R⁷ Acetyl, Methyl, Ethyl oder n-Butyl und
R² bis R⁴ unabhängig voneinander Wasserstoff, Methyl oder Ethyl bedeuten.

Besonders bevorzugte 1 H-Pyrazoliumionen (If) sind solche, bei denen unabhängig voneinander
R¹ unter Wasserstoff, Methyl oder Ethyl,
R², R³ und R⁴ unter Wasserstoff oder Methyl und
R⁷ unter Acetyl, Methyl, Ethyl oder n-Butyl ausgewählt sind.

Besonders bevorzugte 3H-Pyrazoliumionen (Ig) sind solche, bei denen unabhängig voneinander
R¹ unter Wasserstoff, Methyl oder Ethyl,
R², R³ und R⁴ unter Wasserstoff oder Methyl und
R⁷ unter Acetyl, Methyl, Ethyl oder n-Butyl ausgewählt sind.

Besonders bevorzugte 4H-Pyrazoliumionen (Ih) sind solche, bei denen unabhängig voneinander
R¹ bis R⁴ unter Wasserstoff oder Methyl und
R⁷ unter Acetyl, Methyl, Ethyl oder n-Butyl ausgewählt sind.

Besonders bevorzugte 1-Pyrazoliniumionen (Ii) sind solche, bei denen unabhängig voneinander
R¹ bis R⁶ unter Wasserstoff oder Methyl und
R⁷ unter Acetyl, Methyl, Ethyl oder n-Butyl ausgewählt sind.

Besonders bevorzugte 2-Pyrazoliniumionen (Ij) sind solche, bei denen unabhängig voneinander
R¹ unter Wasserstoff, Methyl, Ethyl oder Phenyl,
R⁷ unter Acetyl, Methyl, Ethyl oder n-Butyl und
R² bis R⁶ unter Wasserstoff oder Methyl ausgewählt sind.

Besonders bevorzugte 3-Pyrazoliniumionen (Ik) sind solche, bei denen unabhängig voneinander
R¹ oder R² unter Wasserstoff, Methyl, Ethyl oder Phenyl,
R⁷ unter Acetyl, Methyl, Ethyl oder n-Butyl und
R³ bis R⁶ unter Wasserstoff oder Methyl ausgewählt sind.

Besonders bevorzugte Imidazoliniumionen (Il) sind solche, bei denen unabhängig voneinander
R¹ oder R² unter Wasserstoff, Methyl, Ethyl, n-Butyl oder Phenyl,
R⁷ unter Acetyl, Methyl, Ethyl oder n-Butyl und
R³ oder R⁴ unter Wasserstoff, Methyl oder Ethyl und
R⁵ oder R⁶ unter Wasserstoff oder Methyl ausgewählt sind.

Besonders bevorzugte Imidazoliniumionen (Im) sind solche, bei denen unabhängig voneinander
R¹ oder R² unter Wasserstoff, Methyl oder Ethyl,
R⁷ unter Acetyl, Methyl, Ethyl oder n-Butyl und
R³ bis R⁶ unter Wasserstoff oder Methyl ausgewählt sind.

Besonders bevorzugte Imidazoliniumionen (In) sind solche, bei denen unabhängig voneinander
R¹, R² oder R³ unter Wasserstoff, Methyl oder Ethyl,
R⁷ Acetyl, Methyl, Ethyl oder n-Butyl und
R⁴ bis R⁶ unter Wasserstoff oder Methyl ausgewählt sind.

Besonders bevorzugte Thiazoliumionen (Io) oder Oxazoliumionen (Ip) sind solche, bei denen unabhängig voneinander
R¹ unter Wasserstoff, Methyl, Ethyl oder Phenyl,
R⁷ unter Acetyl, Methyl, Ethyl oder n-Butyl und
R² oder R³ unter Wasserstoff oder Methyl ausgewählt sind.

Besonders bevorzugte 1,2,4-Triazoliumionen (Iq) und (Ir) sind solche, bei denen unabhängig voneinander
R¹ oder R² unter Wasserstoff, Methyl, Ethyl oder Phenyl,
R⁷ unter Acetyl, Methyl, Ethyl oder n-Butyl und
R³ unter Wasserstoff, Methyl oder Phenyl ausgewählt sind.

Besonders bevorzugte 1,2,3-Triazoliumionen (Is) und (It) sind solche, bei denen unabhängig voneinander
R¹ unter Wasserstoff, Methyl oder Ethyl,
R⁷ unter Acetyl, Methyl, Ethyl oder n-Butyl und
R² oder R³ unter Wasserstoff oder Methyl ausgewählt sind oder
R² und R³ 1,4-Buta-1,3-dienylen und alle anderen Wasserstoff sind.

Besonders bevorzugte Pyrrolidiniumionen (Iu) sind solche, bei denen unabhängig voneinander
R¹ und R⁷ unter Acetyl, Methyl, Ethyl oder n-Butyl ausgewählt sind und
R², R³, R⁴ und R⁵ Wasserstoff bedeuten.

Besonders bevorzugte Ammoniumionen (Iv) sind solche, bei denen unabhängig voneinander
R⁷ unter Acetyl, Methyl, Ethyl oder n-Butyl und
R¹, R², und R³ unter Methyl, Ethyl, n-Butyl, 2-Hydroxyethyl, Benzyl oder Phenyl ausgewählt sind.

Besonders bevorzugte Phosphoniumionen (Iw) sind solche, bei denen unabhängig voneinander
R⁷ unter Acetyl, Methyl, Ethyl oder n-Butyl und
R¹, R², und R³ unter Phenyl, Phenoxy, Ethoxy und n-Butoxy ausgewählt sind.

Unter diesen sind die Ammonium-, Phosphonium-, Pyridinium- und Imidazoliumionen bevorzugt.

Ganz besonders bevorzugt sind als Kationen 1,2-Dimethylpyridinium, 1-Methyl-2-ethylpyridinium, 1-Methyl-2-ethyl-6-methylpyridinium, N-Methylpyridinium, 1-Butyl-2-methylpyridinium, 1-Butyl-2-ethylpyridinium, 1-Butyl-2-ethyl-6-methylpyridinium, N-Butylpyridinium, 1-Butyl-4-methylpyridinium, 1,3-Dimethylimidazolium, 1,2,3-Trimethylimidazolium, 1-n-Butyl-3-methylimidazolium, 1,3,4,5-Tetramethylimidazolium, 1,3,4-Trimethylimidazolium, 2,3-Dimethylimidazolium, 1-Butyl-2,3-dimethylimidazolium, 3,4-Dimethylimidazolium, 2-Ethyl-3,4-dimethylimidazolium, 3-Methyl-2-ethylimidazol, 3-Butyl-1-methylimidazolium, 3-Butyl-1-ethylimidazolium, 3-Butyl-1,2-dimethylimidazolium, 1,3-Di-n-Butylimidazolium, 3-Butyl-1,4,5-Trimethylimidazolium, 3-Butyl-1,4-Dimethylimidazolium, 3-Butyl-2-methylimidazolium, 1,3-Dibutyl-2-methylimidazolium, 3-Butyl-4-methylimidazolium, 3-Butyl-2-ethyl-4-methylimidazolium und 3-Butyl-2-ethylimidazolium, 1-Methyl-3-Octylimidazolium, 1-Decyl-3-Methylimidazolium.

Insbesondere bevorzugt sind 1-Butyl-4-methylpyridinium, 1-n-Butyl-3-methylimidazolium und 1-n-Butyl-3-ethylimidazolium.

Als Anionen sind prinzipiell alle Anionen denkbar.

Bevorzugt als Anionen sind Halogenide, F, Cl⁻, Br⁻, I⁻, Acetat CH₃COO⁻, Trifluoracetat CF₃COO⁻, Triflat CF₃SO₃⁻, Sulfat SO₄²⁻, Hydrogensulfat HSO₄⁻, Methylsulfat CH₃OSO₃⁻, Ethylsulfat C₂H₅OSO₃⁻, Sulfit SO₃²⁻, Hydrogensulfit HSO₃⁻, Aluminiumchloride AlCl₄⁻, Al₂Cl₇⁻, Al₃Cl₁₀⁻, Aluminiumtribromid AlBr₄⁻, Nitrit NO₂⁻, Nitrat NO₃⁻, Kupferchlorid CuCl₂⁻, Phosphat PO₄³⁻, Hydrogenphosphat HPO₄²⁻, Dihydrogenphosphat H₂PO₄⁻, Carbonat CO₃²⁻, Hydrogencarbonat HCO₃⁻.

Besonders bevorzugt sind Acetate, Sulfonate, Tosylat p-CH₃C₆H₄SO₃⁻, Sulfate, Phosphate, Bis(trifluormethylsulfonyl)imid (CF₃SO₂)₂N⁻.

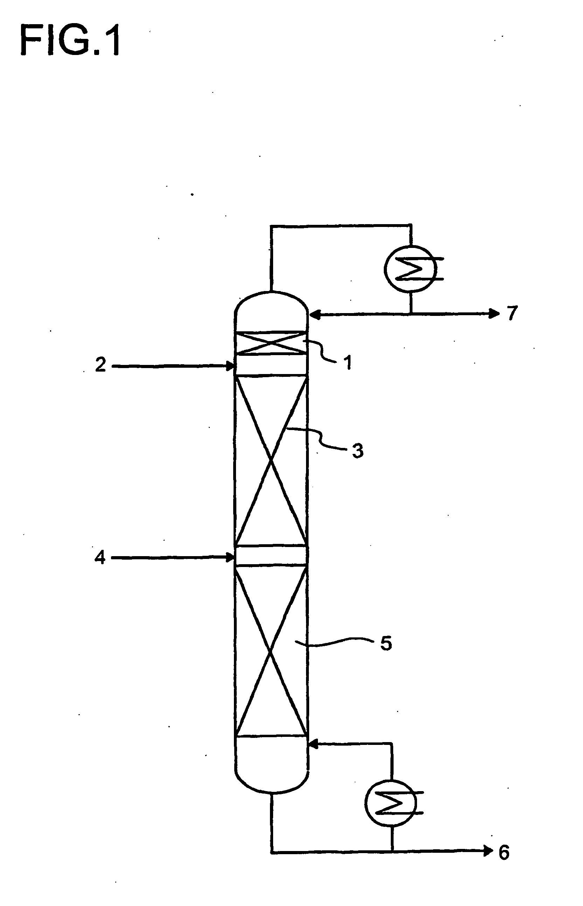

In der Patentanmeldung WO 02/074718 wird eine Ausführungsform der Extraktiv-Rektifikation beschrieben (siehe Figur 1). Mit (2) ist der Zufluss des Entrainers in eine Gegenstrom-Rektifikationskolonne dargestellt. Da in herkömmlichen Verfahren der Entrainer eine geringe, aber bemerkenswerte Flüchtigkeit bezüglich des Kopfproduktes (Strom 7) besitzt, müssen zur Trennung zwischen Kopfprodukt und Entrainer die Trennelemente (1) verwendet werden. Die Trennelemente (3) und (5) bewirken die gewünschte Trennung zwischen Kopf- und Sumpfprodukt unter Wirkung des Entrainers, Strom (4) ist der Zulauf der zu trennenden Komponenten (Feed), Strom(6) ist Sumpfprodukt und der Entrainer. Trennelemente können beispielsweise Böden, geordnete Packungen oder nicht geordnete Füllkörper sein.

Werden Ionische Flüssigkeit als Entrainer verwendet, hat das den Vorteil, dass der Dampfdruck der reinen ionischen Flüssigkeit und damit auch ihr Partialdruck in der Mischung mit dem Kopfprodukt annähernd gleich null sind. Damit können die Trennelemente (1) entfallen. Diese ist nur dann nicht der Fall, wenn flüchtige Verunreinigungen in der Ionischen Flüssigkeit enthalten sind, die z.B. beim Recycling nicht vollständig abgetrennt werden konnten oder Mischungen von Ionischen Flüssigkeiten mit herkömmlichen Lösungsmitteln als Entrainer eingesetzt werden. Um diese vom Kopfprodukt zu trennen ist u.U. doch ein Verstärkungsteil zwischen Zugabestelle der Ionischen Flüssigkeit und dem Kopf der Kolonnen notwendig.

Die bekannten Vorteile von ionischen Flüssigkeiten gegenüber herkömmlichen Entrainern in der Extraktiv-Rektifikation sind im wesentlichen:
- Ionische Flüssigkeiten sind selektiver als herkömmliche Entrainer. Sie ermöglichen durch ihre vergleichsweise große Selektivität, dass im Vergleich zur konventionellen Extraktivrektifikation ein geringerer Massenstrom an Entrainer der Extraktiv-Rektifikation zugeführt und/oder die Trennstufenanzahl in der Extraktiv-Rektifikationskolonne verringert werden kann.
- Durch den äußerst niedrigen Dampfdruck des Entrainers können verschiedene Trennoperationen zur Abtrennung des Entrainers vom Sumpfprodukt verwendet werden, die im Vergleich zur zweiten Rektifikationskolonne bei der konventionellen Extraktivrektifikation einen Vorteil bezüglich Betriebs- und Investkosten ermöglichen.
- Die Trennelemente "1" in Figur 1 führen in der konventionellen Extraktiv-Rektifikation zu einer Trennung des Entrainers vom Kopfprodukt, die Trennung ist aber nie vollständig. Ein Austrag von Anteilen an ionischer Flüssigkeit über die Dampfphase ohne die Trennelemente "1" ist aufgrund ihrer äußerst geringen Flüchtigkeit nicht möglich.
- Investitionskosten werden durch Wegfall der Trennelemente reduziert.

Geeignet sind solche ionischen Flüssigkeiten, die in einer Gesamtkonzentration in der Flüssigkeit von 5 bis 90 Mol %, bevorzugt 10 bis 70 Mol %, zu einer Veränderung des Trennfaktors der Zielkomponenten untereinander verschieden von eins führen.

Der Einsatz von Ionischen Flüssigkeiten als Entrainer in der Extraktiv-Rektifikation ist unter anderem für die folgenden Anwendungen besonders geeignet. z.B. Azeotrope: Amine/Wasser, THF/Wasser, Ameisensäure/Wasser, Alkohole/Wasser, Aceton/- Methanol, Acetate/Wasser, Acrylate/Wasser, Trimethylborat/Methanol oder engsiedende Gemische: Essigsäure/Wasser, C4-Kohlenwasserstoffe, C3-Kohlenwasserstoffe, Alkane/Alkene, generell Trennung von polaren und unpolaren Stoffen, die Azeotrope bilden oder engsiedend sind.

Die Rückgewinnung der ionischen Flüssigkeit nach der Extraktiv-Destillation ist bisher jedoch nicht befriedigend gelöst. Herkömmliche Entrainer werden üblicherweise vom Sumpfprodukt über eine zweite Destillationskolonne abgetrennt. Da Ionische Flüssigkeiten nicht verdampfbar sind, ist die Anreicherung in einem destillativen Gegenstromprozess nicht von Vorteil und führt zu unnötigen Investitionskosten.

In der WO 02/07418 finden sich allgemeine Hinweise, wie der enthaltene Entrainer zurückgewonnen werden kann (Seite 16). Neben einer Verdampfung wird auch der Einsatz einer Abtriebskolonne (Stripper) oder das Ausfällen in eine feste Phase erwähnt.

In der deutschen Patentanmeldung mit dem Aktenzeichen 10313207.4 werden adsorptive Trennverfahren beschrieben, mit deren Hilfe nicht mehr verdampfbare Schwersieder von ionischer Flüssigkeit abgetrennt werden sollen. Dieser Fall tritt dann ein, wenn die verdampfbaren Komponenten bereits von der ionischen Flüssigkeit abgetrennt worden sind. Es handelt sich dabei meistens um Gemische mit einem sehr hohen Anteil an Ionischer Flüssigkeit und geringen Verunreinigungen, die sich aber aufkonzentrieren würden, wenn sie nicht abgetrennt werden würden. Purgeströme aus IF-haltigen Kreislaufströmen sind dafür z.B. eine Hauptanwendung.

Generell ist man bestrebt, die wertvolle ionische Flüssigkeit nach der Extraktiv-Rektifikation vom Schwersieder zu trennen und in hoher Reinheit wieder zu gewinnen. Hierbei erweist es sich jedoch als Problem, dass bei einer Trennung von verdampfbarem Schwersieder durch Verdampfung relativ hohe Temperaturen für eine hinreichende Trennung von Schwersieder und ionischer Flüssigkeit erforderlich sind. Je geringer der Gehalt an Schwersieder in der IF, desto größer wird die Temperatur. Bei Gehalten von Schwersieder um 1 gew% kann diese Temperatur bereits um 200°C liegen. Die genaue Temperatur richtet sich nach dem Dampfdruck des Schwersieders in der IF. Bei noch geringeren Gehalten kann sie rechnerisch leicht auf 1000°C und mehr steigen. Unter verdampfbaren Schwersieder versteht man in diesem Zusammenhang alle verdampfbaren Produkte in der Extraktiv-Destillationskolonne, die nicht als gewünschter Leichtsieder über Kopf der Kolonne abgezogen werden. Beim System Tetrahydrofuran (THF) / Wasser wäre z.B. das THF der Leichtsieder und das Wasser der Schwersieder.

Die hohe Sumpftemperatur führt neben einer Erhöhung der Energiekosten auch zu einer Steigerung des verfahrenstechnischen Aufwands. Weiterhin stellt sich das Problem, dass ab einer bestimmten Temperatur (meist deutlich über 200°C) eine Zersetzung der ionischen Flüssigkeit zu beobachten ist, was sich weiter nachteilig auf das Verfahren auswirkt. Es stellte sich somit die Aufgabe, ein verbessertes Verfahren zur Gewinnung der ionischen Flüssigkeit zu finden, welches den genannten Nachteilen abhilft und das eine verfahrenstechnisch einfache und wirtschaftliche Auftrennung ermöglicht.

Demgemäß wurde ein Verfahren zur Aufarbeitung eines Sumpfstromes enthaltend Schwersieder und ionische Flüssigkeit aus einer Extraktiv-Rektifikation gefunden, bei welcher die ionische Flüssigkeit als Entrainer eingesetzt wird, welches dadurch gekennzeichnet ist, dass man den Sumpfstrom einer Verdampferstufe zuführt, welche bei einem Druck kleiner als 500 mbar, bevorzugt kleiner 100 mbar, besonders bevorzugt kleiner 20 mbar betrieben wird, wobei man den enthaltenen Schwersieder größtenteils aus der IF entfernt, d.h. auf kleiner 5 %, bevorzugt kleiner 1 % und besonders bevorzugt kleiner 100 ppm abreichert. Die notwendige Reinheit der IF hängt hier immer von der jeweils für das Verfahren konkret geforderten Reinheit im Destillatstrom der Extraktivrektifikation ab. Denn sobald sich Verunreinigungen in der zurückgeführten IF befinden, verdampften sie teilweise beim Eintritt in den. Kolonnenkopf und verschmutzten das Destillat. Reicht im Destillat eine Reinheit von 95 %, wie z.B. in bestimmten Fällen bei der Ameisensäure/Wasser-Trennung, dann kann auch bis zu ca. 5 % Wasser in der zurückgeführten IF enthalten sein. Sind dagegen 40 ppm Reinheit im Destillatstrom gefordert, dann sollte die zurückgeführte IF auch nicht mehr als in dieser Größenordung mit Schwersieder verunreinigt sein (40-100 ppm).

Alle angegebenen Konzentrationen sind, wenn nicht anders gekennzeichnet, auf die Masse bezogen, d.h. % bedeuten Gewichtsprozent und ppm bedeuten Gewichts-ppm.

Weiterer Gegenstand dieser Anmeldung ist ein alternatives Verfahren zur Aufarbeitung eines Sumpfstromes enthaltend Schwersieder und ionische Flüssigkeit aus einer Extraktiv-Rektifikation, bei welcher die ionische Flüssigkeit als Entrainer eingesetzt wird, welches dadurch gekennzeichnet ist, dass man den Sumpfstrom einem mit Inertgas beaufschlagten Stripper zuführt. Je nach konkretem, verfahrenstechnischem Anwendungsfall empfiehlt sich hier besonders ein Betrieb des Strippers bei Umgebungsdruck, da in diesem Fall die Inertgase nicht verdichtet werden müssen. In anderen Anwendungsfällen erweist sich ein Betrieb des Strippers bei Unterdruckfahrweise, bevorzugt einem Druck kleiner 900 mbar, besonders bevorzugt kleiner 500 mbar als besonders vorteilhaft, da hier bei gleichem Inertgasstroms die IF auf einen niedrigeren Schwersiedergehalt abgereichter werden kann, bzw. bei gleicher Abreicherung ein geringerer Inertgasstrom notwendig ist.

Die erfindungsgemäße Druckabsenkung bei der Verdampfung führt zu einer schonenden und effektiven Abtrennung der verdampfbaren Schwersieder von der ionischen Flüssigkeit. Hierzu wird das Sumpfprodukt enthaltend ionische Flüssigkeit mit Verunreinigungen von Schwersieder einem weiteren Verdampfer zugeführt. Dieser wird bei redzuziertem Druck betrieben, wodurch die Verdampfung des Schwersieders bei relativ niedrigen Temperaturen gefördert wird.

Die Extraktiv-Rektifikation wird in einer bevorzugten Ausführungsform bei etwa Umgebungsdruck betrieben. Je nach konkretem Anwendungfall kann sich aber auch eine Über- oder Unterdruckfahrweise besonders empfehlen. Dieses hängt ab von dem Dampfdruck der zu trennenden Komponenten und damit von der sich einstellenden Kondensatortemperatur. Sieden die zu trennenden Komponenten alle bei sehr niedrigen Temperaturen, so wird der Fachmann den Druck in der Kolonne erhöhen, damit die Kondensatortemperatur nicht unter 50 °C sinkt. Sonst kann zur Kühlung kein Kühlwasser mehr verwendet werden, und die Kosten steigen, da Kaltwasser oder gar Sole teurer sind als Kühlwasser.

Der Druck im Verdampfer beträgt kleiner etwa 500 mbar, bevorzugt kleiner 100 mbar, besonders bevorzugt kleiner 20 mbar. In einer bevorzugten Ausführungsform kann bei etwa gleicher Temperatur im Verdampfer wie im Kolonnensumpf der Anteil des Schwersieders in der Ionischen Flüssigkeit deutlich erniedrigt werden.

Die Dämpfe des Schwersieders werden entweder durch eine Vakuumpumpe direkt abgesaugt oder zuerst kondensiert und dann durch eine Flüssigkeitspumpe oder ein barometrisches Fallrohr auf Umgebungsdruck gebracht. Ein barometrisches Fallrohr ist ein langes Fallrohr, in dem die Flüssigkeit steht und aufgrund ihrer Masse und der Flüssigkeitssäule Druck aufbaut. Ein 10 m hohes mit Wasser gefülltes Rohr würde bereits eine Druckerhöhung von 1 bar erzeugen. Die Kondensation des Schwersieders erfolgt bei Verdampferdruck und Reinstoffbedingungen, da im Kondensator nur noch der dampfförmige Schwersieder anwesend ist. Damit ergeben sich relativ niedrige Temperaturen, die meist sogar unter 0 °C liegen. Die jeweilige Temperatur hängt vom Dampfdruck des Schwersieders ab. Z.B.: liegt die Siedetemperatur von Wasser für 10 mbar bei 6,9 °C. Hier kann je nach konkreter Trennaufgabe eine Kältemaschine zur Kühlung des Kondensators notwendig sein. Der Vorteil der Variante mit Kondensator und nachfolgender Flüssigkeitspumpe ist, dass kaum Schwersieder verloren geht. Bei Verwendung einer Vakuumpumpe ohne Kondensator geht der Schwersieder über die Gasphase verloren. Bei der Verwendung einer Vakuumpumpe mit Kondensator bei Umgebungsdruck geht kein Schwersieder verloren. Vorteil dieser Variante ist, dass der Kondensator meist mit billigem Kühlwasser gekühlt werden kann. Besonders vorteilhaft ist es, als Vakuumpumpe eine Flüssigkeitsringpumpe einzusetzen. Dann ist bereits eine Teilkondensation bei der Kompression möglich und damit werden die zu verdichtenden Schwersiederdämpfe und die notwendige technische Arbeit geringer. Die Flüssigkeitsringpumpe kann in einer bevorzugten Ausführungsform mit ionischer Flüssigkeit als Laufmedium betrieben werden, was den Vorteil hat, dass die Ionische Flüssigkeit einen zu vernachlässigenden Dampfdruck hat.

Besonders geeignete Verdampfertypen sind Fallfilmverdampfer oder Dünnschichtverdampfer, da sie eine geringe Verweilzeit und ein geringe Temperaturdifferenz aufweisen und damit die thermische Belastung der Produkte verringert wird. Der Fallfilmverdampfer ist einfacher konstruiert und weniger anfällig, da er keine sich drehenden Teile enthält. Daher sind die Investitions- und Betriebskosten eines Fallfilmverdampfers geringer. Wenn möglich sollte daher ein Fallfilmverdampfer verwendet werden.

Durch den bei Unterdruck betriebenen Verdampfer sind extrem niedrige Konzentrationen von Schwersieder in der austretender Ionischer Flüssigkeit erreichbar. Diese Ionische Flüssigkeit kann bevorzugt zur Extraktiv-Rektifikation zurückgeführt werden, und damit sind sehr hohe Reinheiten an Leichtsieder im Destillat der Extraktiv-Rektifikation erreichbar.

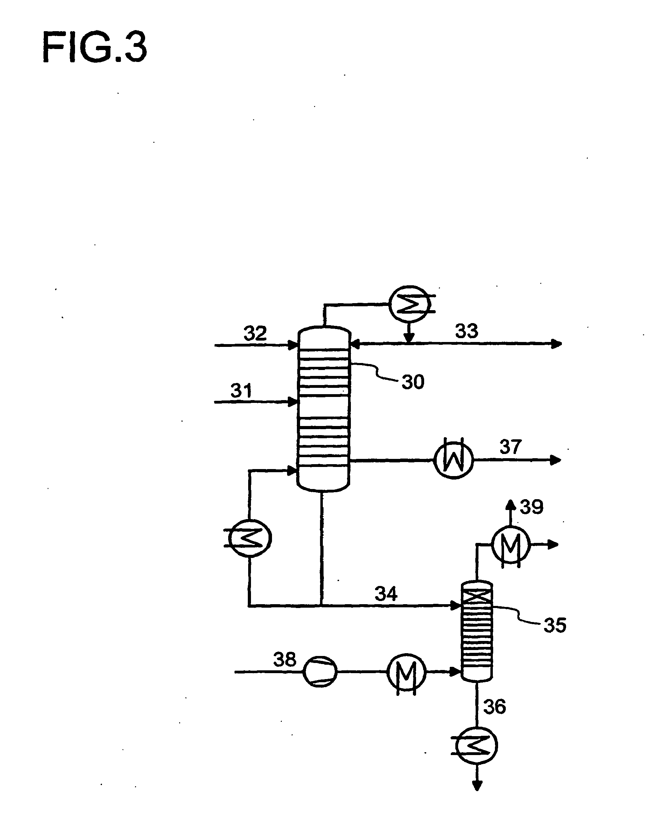

In einem alternativen Verfahren kann das Sumpfprodukt enthaltend Ionische Flüssigkeit mit Verunreinigungen von Schwersieder einem mit Gas oder Dampf betriebenen Stripper zugeführt werden. Der Druck im Stripper liegt - wie vorstehend erläutert - je nach konkretem Anwendungsfall bevorzugt bei etwa Umgebungsdruck, es kann sich jedoch auch ein Betrieb des Strippers bei einem Druck kleiner 900 mbar, besonders bevorzugt kleiner 500 mbar besonders empfehlen. Der Stripper wird bevorzugt im Gegenstrom betrieben (Figur 3). Dabei wird die mit Schwersieder beladene Ionische Flüssigkeit am Kopf des Strippers und das Gas im Sumpf zugegeben. Im Stripper reichert sich der Schwersieder in der Gasphase von unten nach oben an und in Abhängigkeit von Stripperhöhe und eingesetztem Gasstrom sind extrem niedrige Konzentrationen von Schwersieder in unten austretender Ionischer Flüssigkeit erreichbar. Diese Ionische Flüssigkeit kann bevorzugt zur Extraktiv-Rektifikation zurückgeführt werden, und damit sind sehr hohe Reinheiten an Leichtsieder erreichbar.

Zum Strippen wird bevorzugt ein Gas eingesetzt, das billig, verfügbar, ungiftig und inert ist. Besonders bevorzugt wird Luft als Inertgas verwendet. Hier ist zu berücksichtigen, dass die Luft u.U. von Luftfeuchtigkeit (Wasser) befreit, d.h. getrocknet werden muss. Die Luftfeuchtigkeit kann im Sommer bis zu 1 % ausmachen. Da diese Luft im Gegenstrom in Kontakt mit der aus dem Strippersumpf austretenden Ionischen Flüssigkeit ist, kann bei hoher Luftfeuchtigkeit eine gewisse Wasserkonzentration in der Ionischen Flüssigkeit nicht unterschritten werden. Ist die Wasserkonzentration zu hoch, so wird zuviel Wasser in die Extraktiv-Rektifikation eingetragen. Dort verschmutzt es entweder das Kopfprodukt oder führt zu anderen unerwünschten Effekten. Die Lufttrocknung kann z.B. über Adsorptionsverfahren, die in der Literatur bekannt sind (Molsiebe etc.), erreicht werden.

In einer vorteilhaften Variante können auch überhitzte Dämpfe, bevorzugt von Komponenten, die bereits im System vorhanden sind, als Strippmedium eingesetzt werden, wie z.B. bereits enthaltener Leichtsieder. Bei Verwendung des Leichtsieders ergibt sich der Vorteil, dass Spuren von Leichtsieder in der Ionischen Flüssigkeit enthalten sein dürfen, da der Leichtsieder bei der Rückführung der Ionischen Flüssigkeit zum Kopf keine dort störende Verunreinigung darstellt. Desweiteren können die Stripperbrüden dann mit Kühlwasser vollständig kondensiert werden, da kein Inertgas anwesend ist. Die Verluste an Schwersieder sind dann minimal.

Das Kopfprodukt des Strippers enthält Gas mit angereichertem Schwersieder. Dieser kann, wenn es kein Wertprodukt darstellt, verbrannt werden, bzw. wenn er ungiftig ist, in die Umgebungsluft abgegeben werden. Falls der Verlust nicht gewünscht ist, kann er über einen Dephlegmator zu einem großen Anteil abgeschieden werden. Unter einem Dephlegmator versteht man einen Teilkondensator (die Inertgase sind bei diesen Temperaturen nicht kondensierbar). Auch hier sind in Abhängigkeit vom konkreten Anwendungsfall wieder niedrige Temperaturen und damit eine Kältemaschine notwendig, um den Schwersieder quantitativ abzuscheiden. Dabei ist zu berücksichtigen, dass bei der Stripperversion der gesamte Gasstrom, also Inertgas oder Dampf und Schwersieder abgekühlt werden muss. Die benötigte Kälteleistung ist bei der Verdampferversion, bei der nur der Schwersieder abgekühlt wird, geringer.

Bei der Entscheidung, ob ein Dephlegmator notwendig ist, müssen wieder höhere Investitionskosten gegen die Verluste an Schwersieder abgewogen werden. Dieses ist anhand einer Kostenrechnung möglich. Ob die eine oder andere Variante wirtschaftlicher ist, wird wesentlich vom Stoffsystem und von der Größe der Anlage bestimmt.

Eine weitere vorteilhafte Variante des Verfahrens ist die Kombination von externem Verdampfer und Stripper. Das Sumpfprodukt enthaltend ionische Flüssigkeit mit Verunreinigungen von Schwersieder wird dabei zuerst in einen erfindungsgemäß bei Unterdruck betriebenen Verdampfer und danach in einen Stripper gegeben. Ob der Stripper bei Umgebungsdruck oder bei verringertem Druck betrieben wird, hängt auch hier von der jeweiligen Trennaufgabe ab. Dadurch das die Anzahl der Apparate zunimmt, steigen zwar die Investitionskosten, andererseits verringern sich die Energiekosten. In Prozessen, bei denen die Energiekosten gegenüber den Investitionskosten überwiegen, ist dieses die bevorzugte Ausführungsform.

Der Verdampfer kann bei allen oben beschriebenen Versionen insbesondere bei der Kombination mit dem Stripper in einer vorteilhaften Version als einfacher Flash, also ohne zusätzlichen Wärmeeintrag, betrieben werden. Dann verdampft der Schwersieder rein durch die Druckabsenkung. Die Verdampfungsenthalpie wird dabei aus der Inneren Energie der Flüssigkeit gewonnen, d.h. die Temperatur der in den Verdampfer eintretenden Flüssigkeit wird sich abkühlen. Da die Menge des Schwersieders relativ klein ist zur Menge der Ionischen Flüssigkeit, ist die Temperaturerniedrigung auch klein. Vorteil dieser Variante ist, dass der Wärmeübertrager im Verdampfer eingespart werden kann.

Im Abtriebsteil der Extraktiv-Rektifikation wird der Leichtsieder (LS) von Schwersieder (SS) und ionischer Flüssigkeit (IF) abgetrennt, so dass im Sumpf kein Leichtsieder mehr vorhanden ist. Dieses ist durch eine ausreichende Trennstufenzahl im Abtriebsteil für den Fachmann der Destillation erreichbar, wenn die IF eine Selektivität von größer 1,3 bewirkt, was Ihre Aufgabe ist. Da die IF keinen Dampfdruck besitzt, besteht die Dampfphase im Sumpf vollständig aus Schwersieder. Ein Teil davon kann durch einen dampfförmiger Seitenstrom abgezogen werden. Die konstruktive Auslegung des Seitenstroms erfolgt nach den üblichen Regeln. Dabei ist zu beachten, dass durch einen geeigneten Abscheider Flüssigkeitströpfchen abgetrennt werden müssen, da sonst IF mit ausgetragen wird. Da der Trennfaktor zwischen IF und SS unendlich groß ist, reicht eine Verdampfungsstufe zur Abtrennung aus. Nur für den Fall, dass andere schwersiedende Verunreinigungen vorhanden sind, bzw. im Sumpf entstehen oder ein Gemisch aus IF und herkömmlichen Lösungsmittel als Entrainer verwendet wurde, sind zwischen Sumpf und Seitenstrom weitere Trennelemente notwendig.

Das schwersiedende Produkt wird mit dem Seitenstrom bevorzugt im Abtriebsteil nahe am Sumpf, besonders bevorzugt von einer der 3 untersten Stufen, ganz besonders bevorzugt direkt von der untersten Stufe abgezogen.

Die optimale Menge des Seitenstroms hängt von der zulässigen Temperatur im Sumpf der Extraktiv-Rektifikation ab. Je größer der Strom, desto mehr SS wird aus dem Abtriebsteil der Kolonne entfernt und weniger SS ist im IF und damit im Sumpf enthalten. Folglich steigt die Temperatur im Sumpf, denn die IF hat keinen Dampfdruck. Hier sind die thermische Stabilität der Komponenten im Sumpf und die Belastbarkeit des Materials zu berücksichtigen. Ziel ist ein möglichst niedriger SS-Gehalt in der IF ohne thermische Schäden hervorzurufen. Je nach Stoffgemisch und Betriebsdruck kann die zulässige Sumpftemperatur von 50°C bis über 200°C betragen. Bevorzugt liegt sie zwischen 100 und 200°C. Wegen der thermischen Stabilität gängiger ionischer Flüssigkeiten sollten 250°C, bevorzugt 200°C nicht überschritten werden.

Über den Seitenstrom kann der Gehalt an SS im IF- reichen Sumpfstrom der Kolonne stark erniedrigt werden. Erreichbar sind Gehalte an SS in IF von kleiner 10 %, bevorzugt kleiner 5 %, besonders bevorzugt kleiner 1 %, wobei die erreichbaren Werte von Druck und zulässiger Temperatur im Kolonnensumpf abhängen. Vorteilhaft für die Abreicherung des SS aus der IF sind neben der hohen Temperatur ein hoher Dampfdruck des SS und ein niedriger Kolonnendruck.

Soll der SS als flüssiges Produkt anfallen, so ist der dampfförmige Seitenstrom mit Hilfe eines zusätzlichen Kondensators zu verflüssigen.

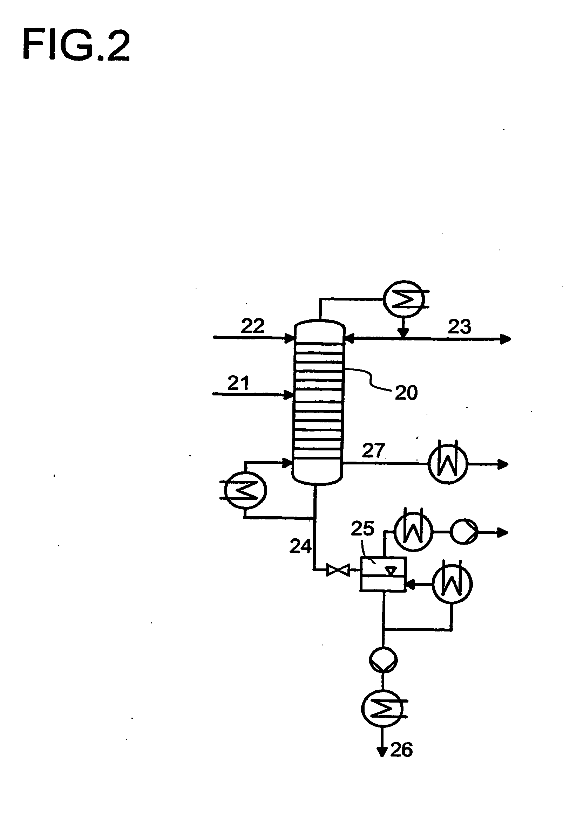

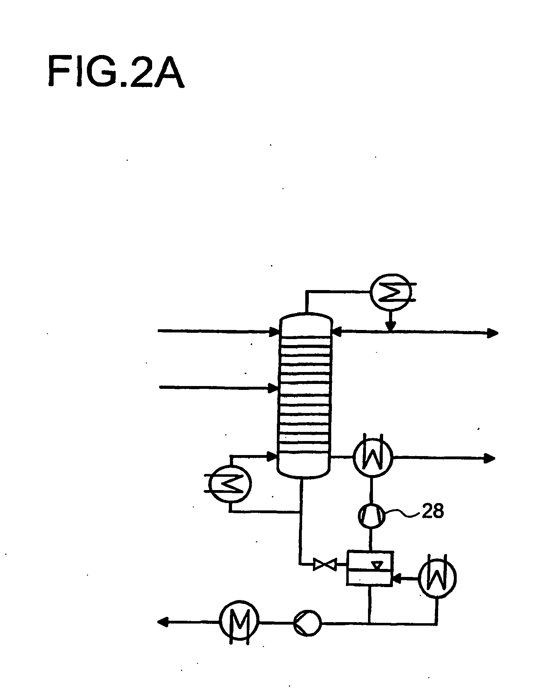

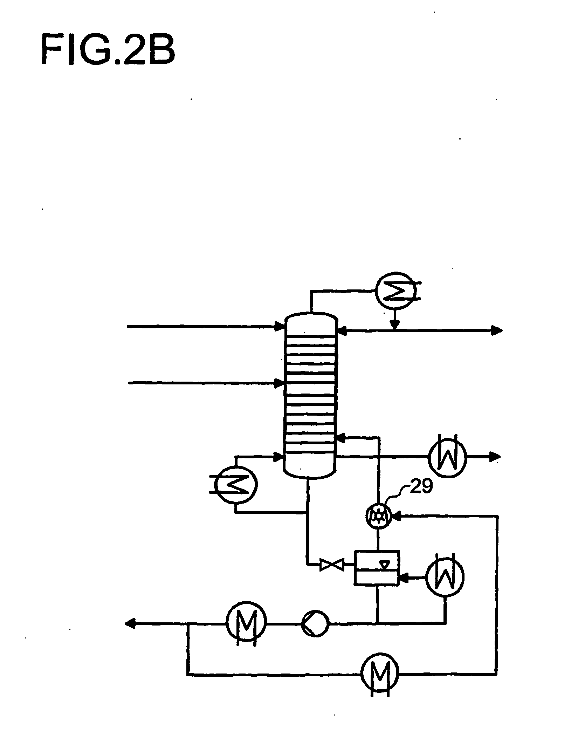

In einer besonders bevorzugten Ausführungsform wird die erfindungsgemäße Aufarbeitungsstufe von Verdampfer bzw. und / oder Stripper mit dem Seitenstrom kombiniert. Hierdurch kann die effektive und schonende Gewinnung hochreiner, ionischer Flüssigkeit in verfahrenstechnisch einfacher Weise weiter verbessert werden. In Figur 2 ist eine Kombination von Seitenstrom und Verdampfer dargestellt. Der Gegenstrom-Rektifikationskolonne (20) wird über Leitung (21) der Feed und Leitung (22) die ionische Flüssigkeit als Entrainer zugeführt. Über Leitung (23) wird der Kopfstrom abgeführt. Mittels Leitung (24) wird der Sumpfstrom einem Verdampfer (25) zugeführt, in welchem die erfindungsgemäße Abtrennung der ionischen Flüssigkeit erfolgt. Die so gewonnene ionische Flüssigkeit kann über Leitung (26) erneut in die Gegenstrom-Rektifikationskolonne rückgeführt werden. Über den in einer bevorzugten Ausführungsform zusätzlich vorhandenen Seitenstrom (27) wird dampfförmiger Schwersieder aus der Kolonne (20) abgezogen, wodurch die Auftrennung weiter verbessert wird.

In Figur 2a ist aufbauend auf Figur 2 beim Verdampfer der Kondensator mit nachfolgender Flüssigkeitspumpe durch einen Verdichter (28) ersetzt worden. Die auf Umgebungsdruck komprimierten Schwersiederbrüden werden in einem Kondensator verflüssigt.

In Figur 2b ist aufbauend auf Figuren 2 und 2a als Verdichter eine Flüssigkeitsringpumpe (29) eingesetzt. Ein Teil der Ionischen Flüssigkeit, die aus dem Verdampfer austritt, wird abgekühlt und als Ringflüssigkeit zur Flüssigkeitsringpumpe geführt. Diese wird im Durchlaufbetrieb betrieben. Das bei Umgebungsdruck anfallende Gemisch aus IF und SS wird in den Abtriebsteil zurückgeführt.

In Figur 3 ist eine Kombination von Seitenstrom und Strippkolonne zu sehen. Der Gegenstrom-Rektifikationskolonne (30) wird über Leitung (31) der Feed und Leitung (32) die ionische Flüssigkeit als Entrainer zugeführt. Über Leitung (33) wird der Kopfstrom abgeführt. Mittels Leitung (34) wird der Sumpfstrom einem Stripper (35) zugeführt, in welchem die erfindungsgemäße Abtrennung der ionischen Flüssigkeit erfolgt. Hierzu wird über Leitung (38) Inertgas in den Stripper geführt und das Inertgas und Schwersieder enthaltende Gasgemisch über Leitung (39) abgeleitet. In einer bevorzugten Ausführungsform werden Anteile des Schwersieders in einem Dephlegmator abgeschieden. Die so gewonnene ionische Flüssigkeit kann über Leitung (36) erneut in die Gegenstrom-Rektifikationskolonne rückgeführt werden. Je nach konkretem Anwendungsfall ist ein Wärmeübertrager notwendig, um die IF vor der erneuten Aufgabe auf die Extraktiv-Rektifikationskolonne auf die geeignete Temperatur abzukühlen. Über den in einer weiteren bevorzugten Ausführungsform zusätzlich vorhandenen Seitenstrom (37) wird dampfförmiger Schwersieder aus der Kolonne (30) abgezogen, wodurch die Auftrennung weiter verbessert wird.

Die Eigenschaften und Beschreibungen, die weiter oben zum Verdampfer genannt worden sind, können auf die bevorzugte Kombination von Verdampfer und Seitenstrom bei der Extraktiv-Rektifikation übertragen werden. Darüber hinaus ergibt sich folgendes:
Bei der Kombination von Seitenstrom und Verdampfer wird ein Großteil der Schwersieder schon im Sumpf der Extraktiv-Rektifikation über den Seitenstrom abgetrennt und damit der im der Kolonne nachgeschalteten Verdampfer abzutrennende Strom wesentlich geringer. Die Menge der Ionischen Flüssigkeit, die durch den Verdampfer fließt, bleibt dabei gleich. Nur der Gehalt an Schwersieder verringert sich. Der Schwersieder, der im bei Unterdruck betriebenen Verdampfer verdampft, kann entweder direkt kondensiert und mit einer Flüssigkeitspumpe auf Umgebungsdruck gebracht werden oder mit einer Vakuumpumpe abgesaugt werden. Da durch den Seitenstrom weniger Schwersieder im Verdampfer abgetrennt werden muss, ist die Trennaufgabe im Verdampfer leichter, er kann kleiner gebaut werden und weniger Energie wird bei Verdampfung und der eventuell folgenden Kondensation verbraucht.

Meist wird auch der Schwersieder enthaltende Seitenstrom kondensiert. Der dortige Kondensator arbeitet im Vergleich zu dem Kondensator des nachgeschalteten Verdampfers bei höherem Druck. Damit fällt die Kondensationsenergie vom Seitenstrom bei höherer Temperatur an, und es kann hier zur Wärmeabfuhr billiges Kühlwasser genutzt werden. Bei ausreichender Temperatur kann die Kondensationsenergie sogar zur Dampferzeugung genutzt werden. Gleichzeitig verringert sich die Kondensationsenergie im Kondensator des Verdampfers, die mit deutlich teuerer Kälteenergie abzuführen ist. Dieses ist einer der wesentlichen Vorteile der Kombination aus Seitenstrom und Verdampfer.

Nachteil der Verwendung eines Seitenstroms ist, dass die gesamte Energie, die von der Extraktiv-Rektifikation gebraucht wird, im Sumpf der Kolonne auf einem höheren Temperaturniveau zugeführt werden muss. Zusätzlich nimmt die Sumpfenergie zu, da der Schwersieder dampfförmig im Seitenstrom entnommen werden muss. Dadurch vergrößert sich der Sumpfverdampfer.

Dieses führt zu einer Erhöhung der Investitions- und Betriebskosten für die Extraktiv-Rektifikation. Dem steht die deutliche Erniedrigung der Kosten beim nachgeschalteten Verdampfer gegenüber. Beide Effekte müssen berücksichtigt und gegeneinander aufgewogen werden. Das Optimum ist vom Stoffsystem und der Kapazität der Anlage abhängig. Da Kälteenergie generell teurer als Dampf ist, überwiegen häufig die Vorteile, die durch den Einsatz eines Seitenstroms erreicht werden.

Die Eigenschaften und Beschreibungen, die weiter oben zur Variante mit Stripper genannt worden sind, können auf die Kombination von Stripper und Seitenstrom bei der Extraktiv-Rektifikation übertragen werden. Darüber hinaus ergibt sich folgendes: Durch den Seitenstrom wird wieder der Großteil des Schwersieders dampfförmig aus der Kolonne gezogen. Dieser kann bei Bedarf in einem zusätzlichen Kondensator verflüssigt werden. Da der Gehalt an SS in der aus dem Sumpf der Kolonne austretenden IF dann kleiner ist, ist die Trennaufgabe für den folgenden Stripper leichter. Der dort benötigte Gas- oder Dampfstrom wird geringer und die Strippkolonne wird dünner. Da die Eintrittskonzentration an SS in der IF abnimmt, sinkt auch die notwendige Höhe des Strippers. Die Verringerung der Höhe fällt aber vergleichsweise gering aus, da nicht die eintretende Konzentration, sondern die geforderte Reinheit der austretenden IF die Höhe der Kolonne maßgeblich bestimmt.

Bei der Version Seitenstrom mit Stripper und Dephlegmator nimmt durch den Seitenstrom zusätzlich zu den Veränderungen beim Stripper die Kühlleistung und die Größe des Dephlegmators deutlich ab. Da hier nur ein Teil des Schwersieders über den Kopfstrom des Strippers austritt, kann es sich im Einzelfall lohnen, diesen Anteil des Schwersieders mit dem Inertgas zu entsorgen, d.h. ihn nicht zu kondensieren. Dann kann die für die Kondensation notwendige Kältemaschine einschließlich der benötigten Energie für Verdichter und Kühlung eingespart werden. Ob die Verringerung der Investitions- und Betriebskosten durch die Einsparung des Dephlegmators mit Kältemaschine die Kosten für den Verlust an Schwersieder überwiegen, ergibt eine Kostenrechung und hängt vom jeweiligen Stoffsystem ab. Gleiches gilt für den Seitenstrom. Ob er bei der Strippervariante wirtschaftlich ist, muss über eine Kostenrechnung für den Einzelfall bewertet werden.

In einer vorteilhaften Variante wird überhitzter Dampf als "Inertgas" zur Reinigung der IF im Stripper eingesetzt. Mit Seitenstrom ist, wie oben bereits aufgeführt, die benötigte Dampfmenge relativ klein. Der Stripperkopfstrom kann bei dieser Variante vollständig kondensiert werden, da er kein wirkliches Inertgas enthält. Der so erzeugte Flüssigkeitsstrom enthält ein Gemisch aus LS und SS, das an passender Stelle der Extraktiv-Rektifikation zugeführt und so wieder aufgearbeitet wird. Der Schwersieder wird nur über den Seitenstrom ausgeschleust. Vorteil dieser Variante ist, dass keine Kältemaschine für die Kondensation gebraucht wird. Es kann mit billigem Kühlwasser gekühlt werden. Zusätzlich geht kein Schwersieder verloren.

Die Version mit Stripper und Seitenstrom ist besonders vorteilhaft bei Systemen, bei denen der Schwersieder Wasser ist. Dann kann der Stripper-Kopfauslass, da er nur Wasser und Inertgas enthält, einfach an die Umgebungsluft abgegeben werden. Da Wasser bereits im System enthalten ist, muss das Inertgas eventuell nicht getrocknet werden. Ob eine Trocknung notwendig ist, muss anhand der maximal zulässigen Konzentration von Wasser in der aus dem Strippersumpf zurückgeführten IF entschieden werden. Diese wird, wie oben bereits ausgeführt, von der Wasserkonzentration im eintretenden Inertgasstrom bestimmt und wirkt sich auf die Wasserverunreinigung im Destillat der Kolonne aus.

Das erfindungsgemäße Verfahren bietet eine verfahrenstechnisch einfache und wirtschaftliche Möglichkeit der Aufarbeitung des Sumpfstromes aus der Extraktiv-Rektifikation. Mit geringem apparativem Aufwand kann hierbei ionische Flüssigkeit in hoher Reinheit gewonnen werden. Dabei sind die für die Trennung erforderlichen Temperaturen relativ niedrig, was neben einer Verringerung des Energiebedarfs auch eine unerwünschte Zersetzung der ionischen Flüssigkeit vermeidet. Die so gewonnene ionische Flüssigkeit kann erneut in die Kolonne zurückgeführt werden und dort erneut als Entrainer Verwendung finden.

Version nur Seitenstrom ohne zusätzliche Aufarbeitung des Sumpfstromes: Wird die mit Resten an SS beladenen IF direkt dem Kopf der Extraktiv-Rektifikation zugegeben (Kreislaufführung der IF), so wird ein Teil des SS am Kopf in die Dampfphase gelangen und das Kopfprodukt (LS) verunreinigen. Wenn die Reinheitsanforderungen für den LS moderat sind, dann kann die Abreicherung des SS im IF alleine durch einen Seitenstrom durchaus ausreichen, und es ist keine weitere Aufarbeitung der IF nötig.

In dieser besonders vorteilhaften Variante würde ein azeotrop- oder engsiedendes Gemisch durch Zugabe einer IF in einer Kolonne mit Seitenstrom ohne weitere Zusatzapparate in Leicht- und Schwersieder aufgetrennt werden. Gegenüber einer normalen Extraktiv-Rektifikation, die immer eine zweite Kolonne zur Aufarbeitung des Entrainers benötigt, bedeutet das eine erhebliche Einsparung an Investitionskosten.

Alle Aufarbeitungsvarianten wurden bisher für die Ionischen Flüssigkeiten beschrieben. Sie gelten analog für alle Entrainer bei der Extraktiv-Destillation, die einen besonders niedrigen Dampfdruck haben, wie z.B. hyperverzweigte Polymere [Seiler, M.; "Dendritic Polymers - interdisciplinary research and emerging applications from unique structural properties", Chem. Eng. Technol., 25, 3, 237 (2002)], Dendrimere [Inoue,K., "Functional dendrimers, hyperbranched and star polymers" Prog. Polym. Sci., 25, 453 (2000)] oder ähnliche Substanzen.

### Beispiele

In den folgenden Beispielen sind alle Konzentrationen, wenn nicht anders gekennzeichnet, auf die Masse bezogen, d.h. % bedeutet Gewichts-% und ppm bedeutet Gewichts-ppm.

In allen Beispielen betrug der Zulauf in die Extraktiv-Rektifikationskolonne 844 kg/h eines binären Gemisches bestehend aus 77 % TMB(Trimethylborat) und 23 % Methanol. Die Kolonne hatte immer 20 Stufen und wurde bei einem Rücklaufverhältnis von RV = 0,5 und einem Druck von P = 1 bar gefahren. Der Feedboden lag immer auf Stufe 12. Die Versuche wurden immer so eingestellt, dass als Kopfprodukt 650 kg/h TMB mit einem Restgehalt von 500 ppm Methanol anfielen.

### Extraktiv-Rektifikation mit Verdampfer bei 1 bar (Beispiel 1)

### (Vergleiche Figur 2 ohne Seitenstrom und ohne Drosselventil zwischen Kolonne und Verdampfer)

Am Kopf der Kolonne wurde die IF (1-Ethyl-3-Methyl-Imidazolium-Tosylat) mit 1441 kg/h aufgegeben. Sie enthielt 103 ppm Methanol. Kopf- und Sumpftemperatur stellten sich bei 67 und 95,4 °C ein. Als Sumpfprodukt ergab sich ein Strom von 1635 kg/h mit 88 % IF und 12 % Methanol. Das Sumpfprodukt wurden in den nachgeschalteten Verdampfer geführt. Der wurde bei 1 bar und 180°C betrieben. Die dort anfallenden Brüden wurden in einem Kondensator bei 1 bar und 64,6°C kondensiert. Als Verdampferbrüden fiel reines Methanol mit 179 kg/h an. Der Sumpfauslass betrug 1456 kg/h mit 99 % IF und 1 % Methanol. Von den Wärmeübertragern wurden folgende Energiemengen verbraucht: Kolonnenkondensator: 90 kW, Kolonnenverdampfer: 134 kW, nachgeschalteter Verdampfer: 182 kW, Kondensator der Verdampferstufe: 64 kW.

Ergebnis: Der Sumpfauslass des Verdampfers sollte eigentlich als gereinigte IF zur Extraktiv-Rektifikation zurückgeführt werden. Er enthält bei dieser Variante noch 1 % Methanol. Würde dieser Strom tatsächlich wieder als Entrainer bei der Extraktiv-Rektifikation verwendet, wäre die Kopfreinheit von 500 ppm Methanol nicht erreichbar. In dieser Version muss der Sumpfaustrag des Verdampfers verworfen und der Extraktiv-Rektifikation ständig frische IF zugeführt werden. Ein solches Verfahren ist wirtschaftlich nicht sinnvoll.

### Extraktiv-Rektifikation mit Verdampfer bei 10 mbar (Beispiel 2)

### (Vergleiche Figur 2 ohne Seitenstrom)

Hier werden nur die von Beispiel 1 abweichenden Eigenschaften aufgeführt: Der der Extraktiv-Rektifikation nachgeschaltete Verdampfer wurde bei 10 mbar und 180°C betrieben. Die Verdampferbrüden wurden im Kondensator bei -19,5°C vollständig kondensiert. Ein reiner Methanolstrom von 194 kg/h viel dabei an. Im nachgeschalteten Verdampfer und Kondensator wurde eine Energiemenge von 185 kW bzw. 81 kW übertragen.

Ergebnis: In dieser vorteilhaften Version, wird bei gleicher nachgeschalteter Verdampfertemperatur ein Restgehalt von 100 ppm Methanol in der zurückzuführenden Ionischen Flüssigkeit erreicht. Diese IF kann wieder als Entrainer genutzt werden um die geforderte Destillatreinheit zu erreichen. Die Extraktiv-Rektifikation wurde gegenüber dem Beispiel 1 unverändert betrieben.

### Extraktiv-Rektifikation mit Stripper (Beispiel 3)

### (Vergleiche Figur 3 ohne Seitenstrom)

Hier werden nur die von Beispiel 1 abweichenden Eigenschaften aufgeführt: Als Entrainer wurden 1523 kg/h IF, die mit 1 ppm Methanol verunreinigt war, aufgegeben. Als Sumpfprodukt der Extraktiv-Rektifikation fiel ein Strom von 1717 kg/h mit 89 % IF und 11 % Methanol an. Er wurde auf den Kopf des Strippers gegeben, der insgesamt 9 Stufen hatte und bei 1 bar betrieben wurde. In den Strippersumpf wurden 2305 kg/h getrocknete, auf 180°C vorgeheizte Luft gegeben. Der Stripperkopfstrom wurde einem Dephlegmator zugeführt, der bei -5,4°C ein Großteil des dampfförmigen Methanols abscheidete. Flüssig fielen im Dephlegmator 122 kg/h Methanol an. Der Rest des Methanols entwich mit dem Luftstrom bei einen Restgehalt von 3 % Methanol. Der Sumpfaustrag des Strippers betrug 1523 kg/h IF mit einer Restbeladung an Methanol von 1 ppm. Die in den Wärmeübertragern benötigten Energiemengen waren: Kolonnenverdampfer: 138 kW, Stripperluftvorwärmung: 100 kW, Dephlegmator des Strippers: 88 kW.

Ergebnis: Durch den nachgeschalteten Stripper kann der Restgehalt an Methanol in der zurückzuführenden Ionischen Flüssigkeit bis auf 1 ppm reduziert werden. Dieser Wert liegt deutlich niedriger als im Beispiel 2 (Version mit Verdampfer bei 10 mbar). Um diesen Wert bei der Verdampferversion zu erreichen, müssten dort noch wesentlich höhere Temperaturen oder niedrigere Drücke eingestellt werden. Für Trennaufgaben, bei denen besonders hohe Kopfreinheiten in der Extraktiv-Rektifikation gefordert sind, ist die Strippervariante der Verdampfervariante überlegen.

### Extraktiv-Rektifikation mit Verdampfer und Stripper (Beispiel 4)

Hier werden nur die von Beispiel 1 abweichenden Eigenschaften aufgeführt: Der Verdampfer wurde bei 0,28 bar und 140 °C betrieben. Dampfförmig traten 182 kg/h reines Methanol aus dem Verdampfer aus. Der Sumpfstrom umfasste 1452 kg/h IF mit 0,8 % Methanol. Er wurde auf den Stripperkopf gegeben. Im Gegenstrom wurden 102 kg/h getrocknete, nicht vorgewärmte Luft geführt. Der Stripperkopfstrom ergab sich zu 113 kg/h Luft mit 10 % Methanol. Im Sumpf des Strippers wurden 1441 kg/h IF mit einem Restgehalt von 1 ppm Methanol entnommen. Die in den Wärmeübertragern benötigten Energiemengen waren: nachgeschalteter Verdampfer: 117 kW, Kondensator des Verdampfers: 66 kW, Stripperluftvorwärmung: 0 kW.

Ergebnis: Durch Kombination von Flash und Stripper konnte hochreine Ionische Flüssigkeit erzeugt werden, die im Kreislauf geführt werden kann. Die maximale Temperatur in der gesamten Anlage betrug nur 140 °C. Dadurch erniedrigt sich die benötigte Energie. Mit 251 kW Energiezufuhr (Sumpf der Kolonne plus nachgeschalteter Verdampfer) ist diese besonders vorteilhafte Variante energetisch sehr günstig.

### Extraktiv-Rektifikation mit Seitenstrom und Verdampfer bei 10 mbar (Beispiel 5)

### (Vergleiche Figur 2)

Hier werden nur die von Beispiel 1 oder 2 abweichenden Eigenschaften aufgeführt: Die zugeführte Entrainermenge lag bei 1384 kg/h IF mit einem Restgehalt von 103 ppm Methanol. Aus dem Sumpf wurden 179 kg/h reines Methanol dampfförmig als Seitenstrom entnommen und danach bei 64,6°C kondensiert. Die Sumpftemperatur erhöhte sich auf 180°C. Als Sumpfprodukt der Kolonne fielen 1399 kg/h mit 99 % IF und 1 % Methanol an. Der Verdampfer wurde bei 10 mbar und 180°C und der Kondensator bei -19,5°C betrieben. Die Verdampferbrüden betrugen 15 kg/h und bestanden aus 100 % Methanol. Der Verdampfersumpf (Rücklauf IF) lag bei 1384 kg/h IF mit einem Restgehalt von 103 ppm Methanol. Die Energiemengen der Wärmeübertrager waren: Kolonnenverdampfer: 301 kW, Seitenstromkondensator: 60 kW, nachgeschalteter Verdampfer: 4 kW, Kondensator: 6 kW.

Ergebnis: Wie im Beispiel 2 wird die notwendige Reinheit im Sumpfaustrag des nachgeschalteten Verdampfers erreicht und die IF kann zurückgeführt werden. In dieser besonders vorteilhaften Version ist durch den Seitenstrom die bei -19,5°C abzuführende Wärme im Kondensator des nachgeschalteten Verdampfers wesentlich geringer. Dieses ist vorteilhaft, das Kälteenergie wesentlich teuer ist als Dampf. Zusätzlich sinkt die Menge des benötigten IF-Kreislaufs und der Methanolverlust ist gering.

### Extraktiv-Rektifikation mit Seitenstrom und Verdampfer bei 10 mbar und Flüssigkeitsringpumpe (Beispiel 6)

### (Vergleiche Figur 2b)

Hier werden nur die von Beispiel 5 abweichenden Ergebnisse aufgeführt: Die Flüssigkeitsringpumpe wurde verwendet, um die 10 mbar im nachgeschalteten Verdampfer einzustellen und das abgesaugte Methanol auf Umgebungsdruck zu komprimieren. Die Pumpe wurde mit IF als Pumpflüssigkeit betrieben. Dazu wurden mit 100 kg/h ein Teil der aus dem Sumpf des nachgeschalteten Verdampfers austretenden IF abgezweigt und auf 28°C abgekühlt. Diese IF wurde der Flüssigkeitsringpumpe zugeführt. Bei der Kompression in der Pumpe löste sich ein Großteil des Methanols in der IF. Der bei Umgebungsdruck austretende Strom von 102,6 kg/h enthält 97,5 % IF und 2,5 % Methanol. Er wurde in den Sumpf der Extraktiv-Rektifikation zurückgeführt. Der dampfförmige Seitenstrom im Sumpf der Kolonne stieg durch diesen Kreislauf auf 193,8 kg/h reines Methanol an. Auf die Extraktiv-Rektifikationskolonne wurden dabei 1381 kg/h IF mit 103 ppm Methanol gegeben. Der Sumpfaustrag der Kolonne war 1496 kg/h IF mit 1 % Methanol. Bei der Kompression in der Flüssigkeitsringpumpe erwärmte sich das IF/Methanol-Gemisch nur gering. Die Leistungen der Wärmeübertrager waren: Kolonnenverdampfer: 319 kW, Seitenstromkondensator: 65 kW, Verdampfer: 4 kW, zusätzliche Kühlung für die IF zur Flüssigkeitsringpumpe 3 kW.

Ergebnis: Bei dieser besonders vorteilhaften Variante wird die Kältemaschine durch eine Flüssigkeitsringpumpe ersetzt. Die Temperatur von 28°C, die mit preiswertem Kühlwasser zu erreichen ist, reicht aus, um einen Großteil des Methanols zu kondensieren. Da die Gasmenge sinkt, sinkt auch die benötigte Verdichtungsenergie. Das gesamte Methanol kann über den dampfförmigen Seitenabzug entnommen werden. Der für die Flüssigkeitsringpumpe benötigte IF-Strom liegt nur bei ca. 7 % des gesamten IF-Kreislaufstrom. Die Anlage vereinfacht sich dadurch und die Investitions- und Betriebskosten sinken.

### Extraktiv-Rektifikation mit Seitenstrom, Stripper und Dephlegmator (Beispiel 7)

### (Vergleiche Figur 3)

Hier werden nur die von Beispiel 1 oder 3 abweichenden Eigenschaften aufgeführt: Als Entrainer wurden 1364 kg/h IF auf die Kolonne gegeben. 179 kg/h reines Methanol wurde als dampfförmiger Seitenstrom dem Sumpf der Kolonne entnommen und danach kondensiert. Die Sumpftemperatur betrug 180°C. Als Sumpfprodukt fiel 1378 kg/h einer Mischung aus 99 % IF und 1 % Methanol an. Diese wurde auf den Kopf des Strippers gegeben. Der Luftstrom betrug 34 kg/h. Er war getrocknet aber nicht vorgeheizt. Die Stripperbrüden wurden einem Dephlegmator zugeführt. Dort wurden 35 kg/h Methanol bei -5,4°C auskondensiert. Als Sumpfprodukt des Strippers fielen 1364 kg IF mit einer Restbeladung von 1 ppm Methanol an. Die Energiemengen der Wärmeübertrager waren: Kolonnenverdampfer: 299 kW, Seitenstromkondensator: 60 kW, Dephlegmator 7 kW.

Ergebnis: In dieser besonders vorteilhaften Version wird gegenüber Beispiel 3 deutlich weniger Luft verbraucht. Damit sinkt auch der Kältebedarf des Dephlegmators. Zusätzlich muss die Luft nicht vorgeheizt werden. Die im Sumpf des Strippers anfallende IF hat wieder eine sehr gute Reinheit und kann direkt in der Extraktiv-Rektifikation wiederverwendet werden.

## Patentansprüche

1. Verfahren zur Aufarbeitung eines Sumpfstromes enthaltend ein oder mehrere Schwersieder und ionische Flüssigkeit aus einer Extraktiv-Rektifikation, bei welcher die ionische Flüssigkeit als Entrainer eingesetzt wird, **dadurch gekennzeichnet, dass** man den Sumpfstrom einer Verdampferstufe zuführt, welche bei einem Druck kleiner als 500 mbar betrieben wird, wobei man den enthaltenen Schwersieder größtenteils dampfförmig von der ionischen Flüssigkeit abtrennt, so dass der Schwersiedergehalt in der Ionischen Flüssigkeit auf Konzentrationen kleiner 5 Gew.-% absinkt, wobei man die aufbereitete ionische Flüssigkeit im Anschluss einem mit Inertgas oder überhitztem Dampf beaufschlagten Stripper zuführt, welcher bei Umgebungsdruck betrieben wird.

2. Verfahren zur Aufarbeitung eines Sumpfstromes enthaltend ein oder mehrere Schwersieder und ionische Flüssigkeit aus einer Extraktiv-Rektifikation, bei welcher die ionische Flüssigkeit als Entrainer eingesetzt wird, **dadurch gekennzeichnet, dass** man den Sumpfstrom einer Verdampferstufe zuführt, welche bei einem Druck kleiner als 500 mbar betrieben wird, wobei man den enthaltenen Schwersieder größtenteils dampfförmig von der ionischen Flüssigkeit abtrennt, so dass der Schwersiedergehalt in der Ionischen Flüssigkeit auf Konzentrationen kleiner 5 Gew.-% absinkt, wobei man die aufbereitete ionische Flüssigkeit im Anschluss einem mit Inertgas oder überhitztem Dampf beaufschlagten Stripper zuführt, welcher bei einem Druck kleiner als 900mbar, besonders bevorzugt kleiner 500mbar betrieben wird.

3. Verfahren zur Aufarbeitung eines Sumpfstromes enthaltend ein oder mehrere Schwersieder und ionische Flüssigkeit aus einer Extraktiv-Rektifikation, bei welcher die ionische Flüssigkeit als Entrainer eingesetzt wird, **dadurch gekennzeichnet, dass** man den Sumpfstrom einem mit überhitztem Dampf des Leichtsieders beaufschlagten Stripper zuführt, welcher bei Umgebungsdruck oder bei einem Druck kleiner 900 mbar betrieben wird.

4. Verfahren gemäß Ansprüchen 1 bis 2, **dadurch gekennzeichnet, dass** man Luft als Inertgas bei der Strippung einsetzt.

5. Verfahren gemäß Anspruch 4, **dadurch gekennzeichnet, dass** man getrocknetes Inertgas zur Strippung einsetzt.

6. Verfahren gemäß Ansprüchen 1 bis 5, **dadurch gekennzeichnet, dass** man am Stripperkopf einen Dephlegmator einsetzt, um noch enthaltene Schwersieder abzuscheiden.

7. Verfahren gemäß Ansprüchen 1 bis 2 oder 4 bis 6, **dadurch gekennzeichnet, dass** man die Verdampfung im der Extraktiv-Rektifikationskolonne nachgeschalteten Verdampfer ohne zusätzliche Wärmezufuhr durch Entspannungsverdampfung durchführt.

8. Verfahren gemäß Ansprüchen 1 bis 7, **dadurch gekennzeichnet, dass** man mittels eines Seitenstroms in der Extraktiv-Raktifikationskolonne Schwersieder dampfförmig abführt.

9. Verfahren gemäß Anspruch 8, **dadurch gekennzeichnet, dass** der zur Abtrennung der Schwersieder verwendete Seitenstrom bevorzugt im Abtriebsteil der Extraktivkolonne nahe am Sumpf, besonders bevorzugt an einer der 3 untersten Stufen, ganz besonders bevorzugt direkt an der untersten Stufe (Sumpf) positioniert ist.

10. Verfahren gemäß Ansprüchen 1 bis 9, **dadurch gekennzeichnet, dass** man die durch die Aufarbeitung gewonnene ionische Flüssigkeit wieder in die Extraktiv-Rektifikationskolonne zurückführt.

11. Verfahren gemäß Anspruch 1 bis 2, **dadurch gekennzeichnet, dass** man im Fall des Einsatzes eines Verdampfers eine Flüssigkeitsringpumpe zur Kompression der Verdampferbrüden auf Umgebungsdruck einsetzt, wobei die Flüssigkeitsringpumpe mit Ionischer Flüssigkeit als Ringflüssigkeit betrieben wird.

12. Verwendung der Verfahren gemäß Ansprüchen 1 bis 11 zur Trennung von Gemischen enthaltend polare und unpolare Stoffen, die Azeotrope bilden oder engsiedend sind.

## Claims

1. A process for working up a bottom stream comprising one or more high boilers and ionic liquid from an extractive rectification in which the ionic liquid is used as entrainer, wherein the bottom stream is fed to an evaporation stage which is operated at a pressure of less than 500 mbar and in which the major part of the high boiler present is separated off in vapor form from the ionic liquid so that the high boiler content of the ionic liquid is reduced to concentrations of less than 5% by weight and subsequently feeding the worked-up ionic liquid to a stripper which is supplied with inert gas or superheated steam and is operated at ambient pressure.

2. A process for working up a bottom stream comprising one or more high boilers and ionic liquid from an extractive rectification in which the ionic liquid is used as entrainer, wherein the bottom stream is fed to an evaporation stage which is operated at a pressure of less than 500 mbar and in which the major part of the high boiler present is separated off in vapor form from the ionic liquid so that the high boiler content of the ionic liquid is reduced to concentrations of less than 5% by weight and subsequently feeding the worked-up ionic liquid to a stripper which is supplied with inert gas or superheated steam and is operated at a pressure of less than 900 mbar, particularly preferably less than 500 mbar.

3. A process for working up a bottom stream comprising one or more high boilers and ionic liquid from an extractive rectification in which the ionic liquid is used as entrainer, wherein the bottom stream is fed to a stripper which is supplied with superheated steam from the low boiler and is operated at ambient pressure or at a pressure of less than 900 mbar.

4. The process according to either claim 1 or 2, wherein air is used as inert gas for stripping.

5. The process according to claim 4, wherein dried inert gas is used for stripping.

6. The process according to any of claims 1 to 5, wherein a dephlegmator is used at the top of the stripper to separate out high boilers still present.

7. The process according to any of claims 1 and 2 or 4 to 6, wherein the evaporation in the evaporator downstream of the extractive rectification column is carried out by depressurization vaporization without additional introduction of heat.

8. The process according to any of claims 1 to 7, wherein high boilers are discharged in vapor form via a side offtake on the extractive rectification column.

9. The process according to claim 8, wherein the side offtake used for separating off the high boilers is preferably positioned in the stripping section of the extractive column close to the bottom, particularly preferably at one of the three bottom-most theoretical plates, very particularly preferably directly at the bottom-most theoretical plate (bottom).

10. The process according to any of claims 1 to 9, wherein the ionic liquid obtained by means of the work-up is recirculated to the extractive rectification column.

11. The process according to either claim 1 or 2, wherein, when an evaporator is used, a liquid ring pump is used for compressing the vapors to ambient pressure, with the liquid ring pump being operated using ionic liquid as ring liquid.

12. The use of the process according to any of claims 1 to 11 for separating mixtures comprising polar and nonpolar materials which form azeotropes or are close-boiling.

## Revendications

1. Procédé de conditionnement d'un courant de fond contenant un ou plusieurs composés à point d'ébullition élevé et un liquide ionique issu d'une rectification extractive, lors de laquelle le liquide ionique est utilisé en tant qu'entraîneur, **caractérisé en ce que** le courant de fond est introduit dans une étape d'évaporation, qui est réalisée à une pression inférieure à 500 mbars, les composés à point d'ébullition élevé contenus étant séparés en majeure partie sous forme gazeuse du liquide ionique, de manière à ce que la teneur en composés à point d'ébullition élevé dans le liquide ionique chute à des concentrations inférieures à 5 % en poids, le liquide ionique conditionné étant ensuite introduit dans un stripper mis sous pression avec un gaz inerte ou de la vapeur surchauffée, qui est exploité à la pression ambiante.

2. Procédé de conditionnement d'un courant de fond contenant un ou plusieurs composés à point d'ébullition élevé et un liquide ionique issu d'une rectification extractive, lors de laquelle le liquide ionique est utilisé en tant qu'entraîneur, **caractérisé en ce que** le courant de fond est introduit dans une étape d'évaporation, qui est réalisée à une pression inférieure à 500 mbars, les composés à point d'ébullition élevé contenus étant séparés en majeure partie sous forme gazeuse du liquide ionique, de manière à ce que la teneur en composés à point d'ébullition élevé dans le liquide ionique chute à des concentrations inférieures à 5 % en poids, le liquide ionique conditionné étant ensuite introduit dans un stripper mis sous pression avec un gaz inerte ou de la vapeur surchauffée, qui est exploité à une pression inférieure à 900 mbars, de manière particulièrement préférée inférieure à 500 mbars.

3. Procédé de conditionnement d'un courant de fond contenant un ou plusieurs composés à point d'ébullition élevé et un liquide ionique issu d'une rectification extractive, lors de laquelle le liquide ionique est utilisé en tant qu'entraîneur, **caractérisé en ce que** le courant de fond est introduit dans un stripper mis sous pression avec de la vapeur surchauffée des composés à bas point d'ébullition, qui est exploité à la pression ambiante ou à une pression inférieure à 900 mbars.

4. Procédé selon les revendications 1 à 2, **caractérisé en ce que** l'air est utilisé en tant que gaz inerte lors du stripping.

5. Procédé selon la revendication 4, **caractérisé en ce qu'**un gaz inerte sec est utilisé pour le stripping.

6. Procédé selon les revendications 1 à 5, **caractérisé en ce qu'**un déflegmateur est utilisé à la tête du stripper, afin de séparer les composés à point d'ébullition élevé encore contenus.

7. Procédé selon les revendications 1 à 2 ou 4 à 6, caractérisé en ce l'évaporation est réalisée dans un évaporateur connecté en aval de la colonne de rectification extractive, sans introduction supplémentaire de chaleur, par évaporation par détente.

8. Procédé selon les revendications 1 à 7, **caractérisé en ce que** les composés à point d'ébullition élevé sont déchargés sous forme gazeuse dans la colonne de rectification extractive par un courant latéral.

9. Procédé selon la revendication 8, **caractérisé en ce que** le courant latéral utilisé pour la séparation des composés à point d'ébullition élevé est positionné de préférence dans la zone de rectification de la colonne d'extraction à proximité du fond, de manière particulièrement préférée au niveau d'un des 3 plateaux inférieurs, de manière particulièrement préférée directement au niveau du dernier plateau (fond).

10. Procédé selon les revendications 1 à 9, **caractérisé en ce que** le liquide ionique récupéré par le conditionnement est à nouveau introduit dans la colonne de rectification extractive.

11. Procédé selon les revendications 1 à 2, **caractérisé en ce que** dans le cas de l'utilisation d'un évaporateur, une pompe circulaire à liquide est utilisée pour la compression des vapeurs de l'évaporateur à la pression ambiante, la pompe circulaire à liquide étant exploitée avec un liquide ionique en tant que liquide circulaire.

12. Utilisation du procédé selon les revendications 1 à 11 pour la séparation de mélanges contenant des substances polaires et apolaires qui forment des azéotropes ou qui ont des points d'ébullition proches.
